(19) Europäisches Patentamt / European Patent Office / Office européen des brevets

(11) **EP 3 469 719 B1**

(12) # FASCICULE DE BREVET EUROPEEN

(45) Date de publication et mention de la délivrance du brevet:
**29.04.2020 Bulletin 2020/18**

(21) Numéro de dépôt: **17722839.2**

(22) Date de dépôt: **16.05.2017**

(51) Int Cl.:
*H04B 1/69* *(2011.01)*      *H04L 27/14* *(2006.01)*
*H04L 27/10* *(2006.01)*      *H04B 1/717* *(2011.01)*

(86) Numéro de dépôt international:
**PCT/EP2017/061758**

(87) Numéro de publication internationale:
**WO 2017/211552 (14.12.2017 Gazette 2017/50)**

(54) **PROCÉDÉ DE DÉMODULATION D'UN SIGNAL REÇU, PRODUIT PROGRAMME D'ORDINATEUR ET DISPOSITIF CORRESPONDANTS**

VERFAHREN ZUR DEMODULATION EINES EMPFANGSSIGNALS SOWIE EIN ENTSPRECHENDES COMPUTERPROGRAMMPRODUKT UND VORRICHTUNG

METHOD FOR DEMODULATING A RECEIVED SIGNAL, AND CORRESPONDING COMPUTER PROGRAM PRODUCT AND DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.06.2016 FR 1655322**

(43) Date de publication de la demande:
**17.04.2019 Bulletin 2019/16**

(73) Titulaire: **B-Com**
**35510 Cesson-Sevigne (FR)**

(72) Inventeurs:
• PAQUELET, Stéphane
  **35700 Rennes (FR)**
• SAVELLI, Patrick
  **35200 Rennes (FR)**

(74) Mandataire: **Vidon Brevets & Stratégie**
**16B, rue de Jouanet**
**BP 90333**
**35703 Rennes Cedex 7 (FR)**

(56) Documents cités:
EP-A1- 2 449 690     EP-A1- 2 763 321
EP-A1- 2 975 814     US-B1- 7 245 930

**Description**

**1 DOMAINE TECHNIQUE**

Le domaine de l'invention est celui de la transmission de données via un lien radiofréquence basé sur la modulation d'une forme d'onde dite « chirp » telle qu'utilisée dans la technologie LoRa®.

Plus précisément, l'invention concerne une méthode de démodulation d'une telle forme d'onde, qui présente des performances améliorées par rapport aux techniques existantes avec une complexité d'implémentation comparable.

La technologie LoRa® étant dédiée à la transmission basse consommation par les objets connectés, l'invention a des applications dans tous les domaines de la vie personnelle et professionnelle dans lesquels les objets connectés sont présents, notamment, mais non exclusivement, dans les domaines de la santé, du sport, des applications domestiques (sécurité, électroménager, etc.), suivi d'objets, etc.

**2 ARRIERE-PLAN TECHNOLOGIQUE**

Présentés comme la « troisième révolution de l'Internet », les objets connectés sont en train de s'imposer dans tous les domaines de la vie quotidienne et de l'entreprise. La plupart de ces objets sont destinés à produire des données grâce à leurs capteurs intégrés afin de fournir des services à valeur ajoutée pour leur propriétaire.

De par les applications visées, ces objets connectés sont pour la plupart nomades. En particulier, ils doivent pouvoir transmettre les données produites, régulièrement ou à la demande, à un utilisateur déporté.

Pour ce faire, la transmission radio longue portée du type radio mobile cellulaire (2G/3G/4G...) a été une technologie de choix. Cette technologie permettait en effet de bénéficier d'une bonne couverture réseau dans la plupart des pays.

Cependant, l'aspect nomade de ces objets s'accompagne souvent d'un besoin en autonomie d'énergie. Or, même basés sur une des technologies radio mobile cellulaire les plus économes en énergie, les objets connectés actuels continuent de présenter une consommation rédhibitoire pour permettre un déploiement à grande échelle à un coût raisonnable.

Face à la problématique de la consommation du lien radio pour de telles applications nomades, de nouvelles technologies radio basse consommation et bas débit dédiées spécifiquement aux réseaux « Internet des Objets », c'est-à-dire des technologies radio pour des réseaux dits LPWAN (pour « Low-Power Wide-Area Networks » en anglais), sont en train de voir le jour.

Dans ce contexte, deux sortes de technologies peuvent être distinguées :

- d'un côté, il existe des technologies propriétaires comme par exemple la technologie de la société Sigfox®, ou bien la technologie LoRa®, ou encore la technologie de la société Qowisio®. En pratique, ces technologies non standardisées reposent toutes sur l'utilisation de la bande de fréquences « Industriel, Scientifique et Médical », dite ISM, et sur la réglementation associée à son utilisation. L'intérêt de ces technologies est qu'elles sont déjà disponibles et permettent le déploiement rapide de réseaux sur la base d'investissements limités. En outre, ils permettent le développement d'objets connectés très économes en énergie et à faible coût ;
- d'un autre côté, il existe plusieurs technologies promues par des organismes de normalisation. A titre d'exemple, on peut citer trois technologies en cours de standardisation auprès du 3GPP (pour « 3rd Generation Partnership Project » en anglais) : NB-IoT (pour « Narrow Band - Internet of Things » en anglais), LTE MTC (pour « Long Term Evolution - Machine Type Communication » en anglais) et EC-GPRS (pour « Extended Coverage - General Packet Radio Service » en anglais). Cependant, de telles solutions ne sont pas encore entièrement spécifiées et vont par ailleurs reposer sur des bandes de fréquences licenciées.

Dans ce contexte, il apparaît que les technologies propriétaires basées sur l'utilisation de la bande ISM se présentent comme les solutions de choix sur le court terme et l'une ou certaines d'entre elles peuvent alors s'imposer de facto comme la solution à utiliser.

Par exemple, le brevet EP 2 449 690 B1 décrit une technique de transmission de l'information basée sur la modulation d'un signal chirp de base sur laquelle se base la technologie LoRa®.

Or, certains opérateurs, comme Bouygues® ou Orange® en France, se sont déjà portés sur la technologie LoRa® pour déployer leur réseau dédié aux objets connectés. Cependant, les premiers retours relèvent des expériences utilisateur peu satisfaisantes liées à des performances limitées du lien radio en conditions réelles.

Il existe donc un besoin pour améliorer les performances d'un récepteur implémentant la technologie LoRa® en conditions réelles, et notamment face à un canal de propagation radio mobile présentant des évanouissements.

Il existe également un besoin qu'une telle amélioration n'induise pas une surconsommation en énergie du récepteur et ne pénalise donc pas l'autonomie de l'objet connecté embarquant un tel récepteur.

**3 RESUME**

Dans un mode de réalisation de l'invention, il est proposé un procédé de démodulation d'un signal reçu. Ce signal reçu résulte de la modulation d'un signal chirp de base, dont une fréquence instantanée varie linéairement entre une première fréquence instantanée f0 et une deuxième fréquence instantanée f1 pendant un temps symbole Ts, et de la transmission du signal chirp modulé dans un canal de transmission. La modulation correspond, pour un symbole de rang s d'une constellation de N symboles, s étant un entier de 0 à N-1, à une permutation circulaire du motif de variation de ladite fréquence instantanée sur le temps symbole Ts, obtenue par un décalage temporel de s fois une durée temporelle élémentaire Tc, telle que N*Tc=Ts.

Un tel procédé comprend une étape d'estimation d'un symbole porté par le signal reçu, mettant en œuvre les sous-étapes suivantes :

- détermination de N composantes de décision, à partir du signal reçu et d'un signal chirp de référence obtenu en modulant le signal chirp de base par un symbole de référence correspondant à un symbole de rang r dans la constellation,
  une composante de décision d'indice l, notée composante $D_l$, étant fonction d'un terme dont la phase dépend quadratiquement de l, avec l un entier de 0 à N-1 ;
- décision du rang $\hat{k}$ du symbole porté par le signal reçu, à partir de la composante de décision, d'indice k, notée composante $D_k$, présentant un extremum de valeur parmi les N composantes de décision.

Ainsi, l'invention propose une solution nouvelle et inventive pour permettre l'estimation d'un symbole porté par un signal reçu résultant de la modulation d'un signal chirp de base présentant une variation linéaire de sa fréquence instantanée, ou de manière équivalente, présentant une variation quadratique de sa phase instantanée.

Pour ce faire, le procédé revendiqué propose de tenir compte de cette variation quadratique de la phase instantanée du signal reçu afin de mettre en œuvre un récepteur optimal pour décider le rang du symbole reçu.

Les performances de réception sont ainsi améliorées tout en conservant une complexité comparable à celle des récepteurs de l'art antérieur.

Selon un mode de réalisation, l'étape d'estimation d'un symbole comprend en outre les étapes suivantes, pour N échantillons du signal reçu et pour N échantillons du signal chirp de référence, pris aux mêmes instants multiples de Tc :

- conjugaison des N échantillons du signal chirp de référence, respectivement des N échantillons du signal reçu, délivrant N échantillons d'un signal chirp conjugué ;
- multiplication terme à terme des N échantillons du signal chirp conjugué par les N échantillons du signal reçu, respectivement du signal chirp de référence, délivrant N échantillons d'un signal multiplié ;
- transformation de Fourier directe ou inverse du signal multiplié, délivrant N échantillons $Y_l$ d'un signal transformé, avec l un entier allant de 0 à N-1 ;

et la composante $D_k$ est en outre fonction d'un terme proportionnel à une amplitude de l'échantillon d'indice k, $Y_k$, parmi les N échantillons $Y_l$ du signal transformé, ainsi que de la phase de l'échantillon $Y_k$.

Ainsi, le procédé revendiqué propose de tenir compte de l'information complète (i.e. amplitude et phase) contenue dans les échantillons du signal en sortie de transformée de Fourier, directe ou inverse, et non pas sur la seule base du module de ces échantillons comme fait dans l'état de la technique. Les performances de réception sont ainsi améliorées tout en conservant une complexité comparable.

Selon un mode de réalisation, la composante $D_k$ est en outre fonction d'un sous-ensemble de N' échantillons $Y_n$ parmi les N échantillons $Y_l$ du signal transformé, avec n différent de σk, avec $N' \leq N$, et avec $\sigma$ un paramètre appartenant à {-1,1}.

Ainsi, la méthode revendiquée permet de prendre en compte la dispersion du canal et l'interférence entre symboles qui en résulte pour décider du rang du symbole reçu, améliorant par là-même les performances de réception en présence d'un canal de transmission présentant des trajets multiples.

Selon un mode de réalisation, le procédé comprend une étape d'obtention (E45) de N coefficients de canal et un échantillon d'indice n du sous-ensemble d'échantillons $Y_n$ est pondéré par un coefficient de couplage proportionnel au coefficient de canal $H_{\sigma k-n[N]}$ dépendant de la différence entre les indices σk et n, avec σ un paramètre appartenant à {-1,1}, et à un terme dont l'argument dépend quadratiquement de l'indice k. Le terme proportionnel à une amplitude de l'échantillon $Y_k$ est un coefficient de canal $H_0$ indépendant de k.

Ainsi, les termes pondérant les échantillons $Y_n$ ont une composante dépendant uniquement de l'écart entre les indices de ces échantillons considérés en sortie de transformée de Fourier. En effet, l'invariance dans le temps de la réponse impulsionnelle du canal conduit à des termes représentatifs de l'interférence entre symboles dépendant uniquement de l'écart entre les indices des échantillons de signal considérés.

Cependant, la variation quadratique de la phase du signal reçu impose que le couplage entre échantillons ne soit pas invariant dans le temps pour un écart donné entre indices d'échantillons considérés.

Ainsi, la prise en compte de ces deux effets dans la structure même d'une composante $D_k$ considérée pour estimer le symbole reçu permet d'implémenter une réception aux performances améliorées en présence d'un canal de transmission présentant des trajets multiples, tout en permettant de travailler dans le domaine fréquentiel, i.e. en travaillant sur les échantillons en sortie de transformée de Fourier.

Selon différents modes de réalisation, la composante $D_k$ est fonction d'un terme proportionnel à :

- la partie réelle de la somme $\sum_{n=1}^{N} Y_{N-n}^* e^{2j\pi\frac{rn}{N}} e^{-2j\pi\frac{k(\sigma k-n)}{N}} H_{\sigma k-n[N]} S_k$, ou du complexe conjugué de la somme, lorsque la transformation de Fourier est une transformée de Fourier directe et lorsque le signal chirp conjugué correspond à la conjugaison du signal chirp de référence ; ou

- la partie réelle de la somme $\sum_{n=0}^{N-1} Y_n^* e^{2j\pi\frac{rn}{N}} e^{-2j\pi\frac{k(\sigma k-n)}{N}} H_{\sigma k-n[N]} S_k$, ou du complexe conjugué de la somme, lorsque la transformation de Fourier est une transformée de Fourier inverse et lorsque le signal chirp conjugué correspond à la conjugaison du signal chirp de référence ; ou

- la partie réelle de la somme $\sum_{n=0}^{N-1} Y_n^* e^{-2j\pi\frac{rn}{N}} e^{2j\pi\frac{k(\sigma k-n)}{N}} H_{\sigma k-n[N]}^* S_k^*$, ou du complexe conjugué de la somme, lorsque la transformation de Fourier est une transformée de Fourier directe et lorsque le signal chirp conjugué correspond à la conjugaison du signal reçu ; ou

- la partie réelle de la somme $\sum_{n=1}^{N} Y_{N-n}^* e^{-2j\pi\frac{rn}{N}} e^{2j\pi\frac{k(\sigma k-n)}{N}} H_{\sigma k-n[N]}^* S_k^*$, ou du complexe conjugué de la somme, lorsque la transformation de Fourier est une transformée de Fourier inverse et lorsque le signal chirp conjugué correspond à la conjugaison du signal reçu ; avec $S_k = (-1)^k e^{j\pi\sigma\frac{k^2}{N}}$ et avec σ un paramètre appartenant à {-1,1}.

Ainsi, la prise en compte sous forme analytique, i.e. dans la structure même de l'organe d'estimation des symboles reçus, de la forme d'onde du signal considéré, par exemple la variation quadratique de sa phase instantanée, permet une implémentation simple et efficace du récepteur optimal au sens du maximum de vraisemblance en canal de transmission multitrajet dans le domaine fréquentiel, i.e. en travaillant sur les échantillons du signal en sortie de transformée de Fourier, directe ou inverse.

Par ailleurs, dans une variante, seuls N' coefficients de canal sont pris en compte parmi les N possibles, simplifiant par là-même les traitements embarqués dans le récepteur.

Selon un mode de réalisation, les coefficients de canal $H_{\sigma k-n[N]}$ sont nuls pour n différent de σk.

Ainsi, le procédé revendiqué permet d'implémenter le récepteur optimal au sens du maximum de vraisemblance dans le domaine fréquentiel, i.e. en travaillant sur les échantillons en sortie de transformée de Fourier en présence d'un canal qui se réduit à un bruit blanc Gaussien additif, ou canal AWGN (pour « Additive white Gaussian noise » en anglais), qui n'introduit donc pas d'interférences entre symboles. Les performances du récepteur sont ainsi améliorées et présentent un critère d'optimalité en canal AWGN pour un surcoût calculatoire minime.

Selon un mode de réalisation, l'étape d'obtention comprend en outre une estimation des coefficients de canal à partir des N échantillons $Y_n$ du signal transformé et d'au moins un symbole $k_i$ prédéterminé.

Ainsi, le procédé revendiqué permet d'estimer les paramètres nécessaires à la prise en compte du canal de transmission en vue de l'implémentation d'un récepteur optimal pour l'estimation des symboles reçus en travaillant dans le domaine fréquentiel, i.e. en travaillant sur les échantillons en sortie de transformée de Fourier. Par ailleurs, la prise en compte sous forme analytique de la forme d'onde du signal considéré, par exemple la variation quadratique de sa phase instantanée, permet de n'avoir à estimer que la partie invariante dans le temps des termes générant de l'interférence entre symboles, i.e. de la partie ne dépendant que de la différence entre les indices des échantillons considérés, conduisant par là-même à une implémentation efficace de l'étape d'estimation des paramètres représentatifs de l'impact du canal de transmission, et donc du récepteur.

$$\underline{\hat{H}} = \begin{bmatrix} \hat{H}_0 \\ \hat{H}_1 \\ \vdots \\ \hat{H}_{N-1} \end{bmatrix},$$

Selon un mode de réalisation, les coefficients de canal estimés formant un vecteur $\underline{\hat{H}}$, l'estimation des coefficients étant effectuée sur la base de Ns symboles reçus, $k_i$ désignant le rang du i-ème desdits Ns symboles dans la constellation de N symboles, $r_i$ désignant le rang d'un symbole de référence utilisé lors de la réception dudit i-ème symbole, $Y_l^{(i)}$ désignant N échantillons dudit signal transformé obtenu lors de ladite réception dudit i-ème symbole,

le vecteur $\hat{\underline{H}}$ estimé de $\underline{H} = \begin{bmatrix} H_0 \\ H_1 \\ \vdots \\ H_{N-1} \end{bmatrix}$ s'exprime comme $\hat{\underline{H}} = \frac{1}{N_s}\sum_{i=0}^{N_s-1} \underline{Y}'^{(i)}$ avec

$$\underline{Y}'^{(i)} = \frac{1}{N}S^*_{k_i-r_i[N]}\begin{bmatrix} e^{+2j\pi\frac{r_i(0-\sigma_i(k_i-r_i))}{N}}e^{2j\pi\frac{(k_i-r_i)\cdot 0}{N}}Y^{(i)}_{0-\sigma_i(k_i-r_i)[N]} \\ e^{+2j\pi\frac{r_i(1-\sigma_i(k_i-r_i))}{N}}e^{2j\pi\frac{(k_i-r_i)\cdot 1}{N}}Y^{(i)}_{1-\sigma_i(k_i-r_i)[N]} \\ \vdots \\ e^{+2j\pi\frac{r_i(N-1-\sigma_i(k_i-r_i))}{N}}e^{2j\pi\frac{(k_i-r_i)\cdot(N-1)}{N}}Y^{(i)}_{N-1-\sigma_i(k_i-r_i)[N]} \end{bmatrix}$$

- lorsque la transformation de Fourier correspond à une transformée de Fourier directe et lorsque le signal chirp conjugué correspond à la conjugaison du signal chirp de référence ; ou

$$\underline{Y}'^{(i)} = S^*_{k_i-r_i[N]}\begin{bmatrix} e^{-2j\pi\frac{r_i(\sigma_i(k_i-r_i)-0)}{N}}e^{2j\pi\frac{(k_i-r_i)\cdot 0}{N}}Y^{(i)}_{\sigma_i(k_i-r_i)-0[N]} \\ e^{-2j\pi\frac{r_i(\sigma_i(k_i-r_i)-1)}{N}}e^{2j\pi\frac{(k_i-r_i)\cdot 1}{N}}Y^{(i)}_{\sigma_i(k_i-r_i)-1[N]} \\ \vdots \\ e^{-2j\pi\frac{r_i(\sigma_i(k_i-r_i)-N+1)}{N}}e^{2j\pi\frac{(k_i-r_i)\cdot(N-1)}{N}}Y^{(i)}_{\sigma_i(k_i-r_i)-N+1[N]} \end{bmatrix}$$

- lorsque la transformation de Fourier correspond à une transformée de Fourier inverse et lorsque le signal chirp conjugué correspond à la conjugaison du signal chirp de référence ; ou

$$\underline{Y}'^{(i)} = \frac{1}{N}S^*_{k_i-r_i[N]}\begin{bmatrix} e^{-2j\pi\frac{r_i(\sigma_i(k_i-r_i)-0)}{N}}e^{2j\pi\frac{(k_i-r_i)\cdot 0}{N}}Y^{(i)^*}_{\sigma_i(k_i-r_i)-0[N]} \\ e^{-2j\pi\frac{r_i(\sigma_i(k_i-r_i)-1)}{N}}e^{2j\pi\frac{(k_i-r_i)\cdot 1}{N}}Y^{(i)^*}_{\sigma_i(k_i-r_i)-1[N]} \\ \vdots \\ e^{-2j\pi\frac{r_i(\sigma_i(k_i-r_i)-N+1)}{N}}e^{2j\pi\frac{(k_i-r_i)\cdot(N-1)}{N}}Y^{(i)^*}_{\sigma_i(k_i-r_i)-N+1[N]} \end{bmatrix}$$

- lorsque la transformation de Fourier correspond à une transformée de Fourier directe et lorsque le signal chirp conjugué correspond à la conjugaison dudit signal reçu ; ou

$$\underline{Y}'^{(i)} = S^*_{k_i-r_i[N]}\begin{bmatrix} e^{+2j\pi\frac{r_i(0-\sigma_i(k_i-r_i))}{N}}e^{2j\pi\frac{(k_i-r_i)\cdot 0}{N}}Y^{(i)^*}_{0-\sigma_i(k_i-r_i)[N]} \\ e^{+2j\pi\frac{r_i(1-\sigma_i(k_i-r_i))}{N}}e^{2j\pi\frac{(k_i-r_i)\cdot 1}{N}}Y^{(i)^*}_{1-\sigma_i(k_i-r_i)[N]} \\ \vdots \\ e^{+2j\pi\frac{r_i(N-1-\sigma_i(k_i-r_i))}{N}}e^{2j\pi\frac{(k_i-r_i)\cdot(N-1)}{N}}Y^{(i)^*}_{N-1-\sigma_i(k_i-r_i)[N]} \end{bmatrix}$$

- lorsque la transformation de Fourier correspond à une transformée de Fourier inverse et lorsque le signal chirp conjugué correspond à la conjugaison dudit signal reçu; avec $S_k = (-1)^k e^{j\pi\sigma\frac{k^2}{N}}$ et avec $\sigma$ un paramètre appartenant à {-1,1}.

Ainsi, l'estimation des paramètres nécessaires à la prise en compte du canal de transmission correspond à l'erreur quadratique minimale entre le symbole émis et le symbole reçu, réduisant par là-même les erreurs d'estimation sur le symbole reçu.

Par ailleurs, dans une variante, seuls N' coefficients de canal sont pris en compte parmi les N possibles, simplifiant par là-même les traitements embarqués dans le récepteur.

Selon un mode de réalisation, l'étape d'estimation des coefficients de canal comprend les sous-étapes suivantes :

- calcul de paramètres représentatifs du coefficient de canal $H_0$ et d'un autre des coefficients de canal ;
- obtention de paramètres représentatifs des coefficients de canal restants à partir des paramètres calculés.

Ainsi la forme d'onde chirp ainsi que le choix de la valeur de Tc dans des systèmes effectifs comme le système LoRa® (8us) qui reste grand par rapport à la dispersion temporelle maximale du canal conduisent au fait que seulement deux paramètres restent à estimer (e.g. $H_0$ et un autre terme $H_1$ avec I non nul) pour la détermination de l'ensemble des termes $H_1$, conduisant ainsi à une grande simplicité d'implémentation de l'étape d'estimation des paramètres représentatifs de l'impact du canal de transmission, et donc du récepteur au final.

Selon un mode de réalisation, le coefficient de canal d'indice I non nul est inversement proportionnel à $\sin\frac{\pi l}{N}$.

Ainsi la forme d'onde chirp et le choix de la valeur de Tc dans des systèmes effectifs comme le système LoRa® qui reste grand par rapport à la dispersion temporelle maximale du canal, conduisent également à une décroissance exponentielle de l'amplitude des termes $H_1$ en fonction de I. Ceci montre qu'il peut être envisagé de n'utiliser qu'une quantité restreinte des termes $H_1$ pour modéliser l'effet du canal, e.g. les termes correspondant à un indice I inférieur ou égal à 10, réduisant par là-même la complexité calculatoire du récepteur optimal au sens du maximum de vraisemblance.

Selon un mode de réalisation, le symbole prédéterminé est un symbole d'une séquence d'apprentissage ou un symbole reçu dont le rang $\hat{k}$ a été décidé lors d'une exécution précédente de ladite étape d'estimation de symbole.

Ainsi, l'estimation des paramètres nécessaires à la prise en compte du canal de transmission peut se faire sur la base de symboles connus, e.g. séquences d'apprentissage ou de synchronisation, permettant par là-même une estimation robuste de ces paramètres, ou sur la base de symboles de données préalablement reçus, permettant par là-même d'affiner cette estimation au cours de la réception.

L'invention concerne également un programme d'ordinateur, comprenant des instructions de code de programme pour la mise en œuvre d'un procédé de démodulation d'un signal reçu résultant de la modulation d'un signal chirp de base tel que décrit précédemment, selon l'un quelconque de ses différents modes de réalisation, lorsque ledit programme est exécuté par un processeur.

Dans un autre mode de réalisation de l'invention, il est proposé un dispositif de démodulation d'un signal reçu, le signal reçu résultant de la modulation d'un signal chirp de base telle que décrit précédemment.

Un tel dispositif de démodulation comprend une machine de calcul reprogrammable ou une machine de calcul dédiée, apte à et configurée pour :

- déterminer de N composantes de décision, à partir du signal reçu et d'un signal chirp de référence obtenu en modulant le signal chirp de base par un symbole de référence correspondant à un symbole de rang r dans la constellation,
- une composante de décision d'indice I, notée composante $D_1$, étant fonction d'un terme dont la phase dépend quadratiquement de I, avec I un entier de 0 à N-1 ;
- décider du rang $\hat{k}$ du symbole porté par le signal reçu, à partir de la composante de décision, d'indice k, notée composante $D_k$, présentant un extremum de valeur parmi les N composantes de décision.

Un tel dispositif de démodulation est notamment apte à mettre en œuvre le procédé de démodulation d'un signal reçu résultant de la modulation d'un signal chirp de base selon l'invention (selon l'un quelconque des différents modes de réalisation précités).

Ainsi, les caractéristiques et avantages de ce dispositif sont les mêmes que ceux du procédé de démodulation décrit précédemment. Par conséquent, ils ne sont pas détaillés plus amplement.

## 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :

- la figure 1 illustre les caractéristiques d'un chirp non modulé utilisé dans la technologie LoRa® ;
- la figure 2 illustre les fréquences instantanées et les phases instantanées de différent chirps modulés selon la technologie LoRa® ;
- les figures 3a et 3b illustrent des structures de réception selon différents modes de réalisation de l'invention ;
- la figure 4 illustre les étapes d'un procédé de démodulation selon différents modes de réalisation de l'invention ;
- la figure 5 illustre la décroissance des termes de couplage entre échantillons selon différents modes de réalisation de l'invention ;
- la figure 6 illustre les performances obtenues comparativement à celles obtenues par la technique de l'art antérieur dans un mode de réalisation particulier de l'invention ;
- les figures 7a et 7b présentent des exemples de structures de dispositif de démodulation selon différents modes de réalisation de l'invention.

## 5 DESCRIPTION DETAILLEE DE L'INVENTION

Sur toutes les figures du présent document, les éléments et étapes identiques sont désignés par une même référence.

Le principe général de l'invention repose sur l'estimation d'un symbole d'un signal reçu, correspondant à un signal chirp modulé transmis dans un canal de transmission, à partir de N composantes de décision représentatives du symbole, dans une constellation de N symboles.

Pour ce faire, la I-ème composante parmi les N composantes de décision est une fonction de I via un terme complexe dont l'argument varie quadratiquement en fonction de I. L'indice $\hat{k}$ représentatif du symbole reçu dans la constellation de N symboles est alors déterminé comme fonction de l'indice k de la composante de décision qui présente un extremum de valeur parmi les N composantes de décision.

La solution proposée permet notamment de démoduler un signal généré en utilisant la technique décrite dans le brevet EP 2 449 690 B1 précité.

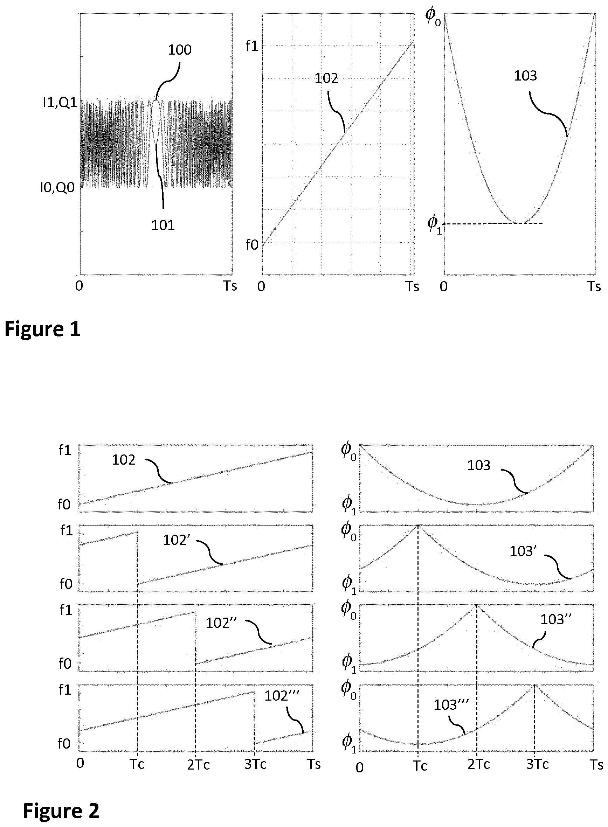

Comme déjà indiqué, ce brevet EP 2 449 690 B1 décrit une technique de transmission de l'information basée sur la modulation d'un signal chirp de base. Comme représenté sur la **figure 1**, la fréquence instantanée 102 du signal chirp de base varie linéairement entre une première fréquence instantanée f0 et une deuxième fréquence instantanée f1 pendant la durée Ts d'un symbole. Une telle fréquence instantanée est ici représentative de la vitesse de rotation dans le plan complexe du vecteur dont les coordonnées sont données par les signaux en phase 100 et en quadrature 101 représentant le signal modulant destiné à moduler la porteuse radio de manière à transposer le signal chirp de base sur des fréquences porteuses et ainsi générer un signal radiofréquence.

Le signal chirp étant à enveloppe constante, le signal en phase 100, respectivement en quadrature 101, oscille entre deux valeurs extrêmales, I0 et I1, respectivement Q0 et Q1, sa fréquence variant linéairement dans le temps tout comme la fréquence instantanée 102 du signal chirp de base résultant. De par la variation linéaire de la fréquence instantanée 102, le signal chirp de base ainsi défini présente une phase instantanée 103 qui varie de manière quadratique entre deux valeurs $\phi_0$ et $\phi_1$ pendant la durée Ts, la fréquence instantanée étant la dérivée de la phase instantanée.

Les signaux chirp modulés sont alors obtenus par permutation circulaire du motif de variation de la fréquence instantanée du chirp de base, sur une durée Ts, obtenue suite à un décalage temporel de k fois une durée temporelle élémentaire, dite durée « chip », Tc. L'indice k est alors représentatif du rang d'un symbole dans une constellation de N symboles et l'on a alors N*Tc=Ts. À titre illustratif, la **figure 2** représente la fréquence instantanée 102, 102', 102", 102''' et la phase instantanée 103, 103', 103", 103''' de différents chirps modulés correspondant respectivement à k=0, k=1, k=2 et k=3, i.e. permettant la transmission de l'information sur la base d'une constellation de quatre symboles. Le chirp de base, correspondant à k=0, est alors interprété dans ce cas comme portant le symbole de rang zéro dans la constellation.

Les inventeurs ont constaté que, selon cette technologie, la détermination de la valeur d'un symbole reçu via un tel signal, i.e. la détermination de son rang k dans la constellation de N symboles, est équivalente à la détermination de l'indice k ayant servi de base au calcul du décalage temporel utilisé pour engendrer le motif de phase et de fréquence instantanées du signal chirp modulé en question.

Il apparaît en effet que le signal chirp de base peut s'exprimer dans le domaine temporel, et sur la durée d'une période symbole, i.e. pour t allant de 0 à Ts comme

$$s(t) = e^{j\phi(t)}$$

où

$$\phi(t) = 2\pi \left( f_0 + \frac{f_1 - f_0}{2T_s} t \right) t + \phi_0$$

avec $\phi_0$ la valeur initiale de la phase.

En pratique, le signal LoRa® est tel que la bande passante du signal chirp, i.e. $|f_1 - f_0|$, est ajustée à l'inverse de la durée chip Tc, et f1 est choisi tel que $f_1 = -f_0$. Sachant que Ts=N*Tc, l'expression de la phase instantanée du signal chirp peut alors se réécrire comme

$$\phi(t) = \frac{2\pi}{T_c} \sigma \left( \frac{t}{2NT_c} - \frac{1}{2} \right) t + \phi_0$$

avec $\sigma$ un paramètre appartenant à {-1,1} permettant de modéliser aussi bien des chirps montants (i.e. avec une fréquence instantanée croissante), que descendants (i.e. avec une fréquence instantanée décroissante).

L'expression analytique, $s_k(t)$, d'un chirp modulé par un symbole de rang k dans la constellation de N symboles (k étant donc compris entre 0 et N-1), et correspondant donc à une permutation circulaire du motif du chirp de base comme décrit ci-dessus, s'exprime alors comme

$$s_k(t) = s(t - kT_c[T_S]) = e^{j\phi(t-kT_c[T_S])} \qquad \text{(Eq-1)}$$

où [.] désigne la fonction modulo.

Cette équation peut alors se reformuler comme suit, pour t compris entre 0 et Ts=N*Tc:

$$s_k(t) = e^{2j\pi \sigma \frac{N}{2} \bar{\phi}\left(\frac{1}{N}\left(\frac{t}{T_c} - k\right)\right)} \qquad \text{(Eq-2a)}$$

avec :

$$\bar{\phi}(u) = (u - 1)u \text{ pour } u \in [0,1] \qquad \text{(Eq-2b)}$$

$$\bar{\phi}(u) = (u + 1)u \text{ pour } u \in [-1,0] \qquad \text{(Eq-2c)}$$

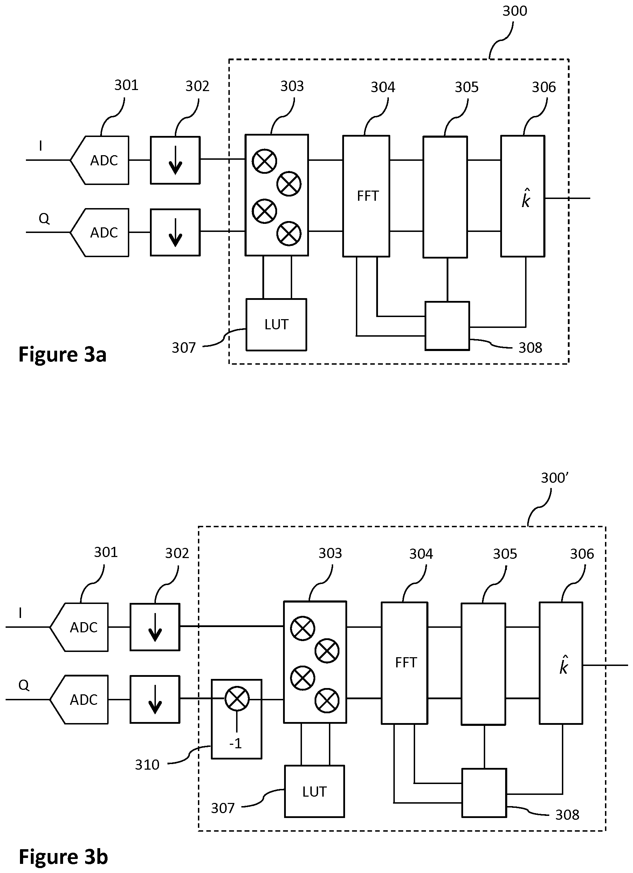

On décrit maintenant, en relation avec les **figures 3a et 3b** deux structures de réception permettant d'estimer un symbole porté par un signal reçu, correspondant à un signal chirp de base modulé selon la technique décrite ci-dessus, i.e. permettant de décider de l'indice k utilisé pour engendrer le motif de variation des fréquence et phase instantanées de ce signal, selon différents modes de réalisation de l'invention.

Plus particulièrement, ces figures illustrent les structures utilisées pour effectuer les traitements sur les signaux en phase, I, et en quadrature, Q, représentant le signal modulant obtenu après démodulation radiofréquence, ou démodulation RF, du signal radiofréquence reçu (dans la suite de cette demande de brevet, le terme démodulation RF désigne la transposition en bande de base du signal reçu, cette transposition délivrant des signaux I et Q analogiques représentant le signal modulant la porteuse RF reçue, et le terme démodulation désigne les traitements effectués sur les signaux I et Q, souvent après échantillonnage et quantification, conduisant à la détermination de l'information contenue dans le signal modulant). Lors de cette démodulation RF, il est toujours possible de choisir une fréquence porteuse de façon à ce que $f_1 = -f_0$.

En pratique, de tels signaux I et Q sont obtenus via l'utilisation d'un récepteur RF connu de l'homme du métier (par exemple un récepteur à conversion directe, superhétérodyne ou toute architecture équivalente), implémentant un démodulateur RF en quadrature et délivrant deux voies analogiques I et Q.

Les signaux I et Q sont alors échantillonnés par un convertisseur analogique numérique ADC 301 (par exemple un convertisseur flash, ou à base de modulateur sigma-delta, ou du type SAR pour « Successive Approximation Register » en anglais, ou tout autre équivalent) présent sur la voie de réception correspondante. Dans une chaine de réception classique, un tel convertisseur travaillant à une fréquence d'échantillonnage souvent élevée par rapport à la bande passante du signal utile, le signal délivré par l'ADC est décimé par un étage de décimation 302 (par exemple un filtre à phase linéaire du type CIC pour « Cascaded Integrator-Comb en anglais » ou tout autre équivalent) présent sur chacune des voies I et Q de manière à délivrer chacun N échantillons, pouvant être interprétés comme les parties réelles et imaginaires de N échantillons complexes.

Les N échantillons complexes sont alors délivrés à un dispositif de démodulation 300, 300' comprenant différents modules.

Selon le mode de réalisation illustré sur la figure 3a, les N échantillons complexes sont directement délivrés à un multiplieur complexe 303. Le multiplieur complexe 303 multiplie alors terme à terme les N échantillons complexes avec N échantillons complexes représentatifs d'un signal chirp de référence conjugué délivré par un module de génération 307, ici une table de correspondance, ou LUT (pour « LookUp Table » en anglais), stockant les échantillons précalculés correspondants.

Un tel signal chirp conjugué est ici défini comme un signal chirp dont la fréquence instantanée varie inversement de celle du signal chirp en question. Par exemple, reconsidérant le cas d'un signal chirp de base comme discuté ci-dessus en relation avec la figure 1, i.e. dont la fréquence instantanée varie linéairement de f0 à f1 sur une durée Ts, le signal chirp de base conjugué présentera alors une fréquence instantanée qui varie linéairement de f1 à f0 sur la même durée Ts. De la sorte, la multiplication d'un signal chirp par son conjugué annule la variation linéaire de sa fréquence instantanée. Le résultat présente alors une fréquence instantanée constante.

Dans un autre mode de réalisation illustré sur la figure 3b, le signe de la partie imaginaire des N échantillons complexes correspondant au signal reçu est inversé par un module d'inversion 310. Ainsi, le module d'inversion 310 délivre des signaux correspondant aux signaux bande de base I et Q représentatif du signal chirp conjugué du signal chirp effectivement reçu.

Les N échantillons complexes ainsi obtenus sont alors délivrés au multiplieur complexe 303 qui les multiplie terme à terme avec N échantillons complexes représentatifs du signal chirp de référence délivré par le module de génération 307.

Les N échantillons complexes délivrés par le multiplieur complexe 303 sont donc, dans ce deuxième mode de réalisation, les complexes conjugués de ceux obtenus dans le mode de réalisation décrit ci-dessus en relation avec la figure 3a.

Les N échantillons complexes délivrés par le multiplieur complexe 303 sont alors délivrés à un module de transformée de Fourier discrète 304.

Dans un mode de réalisation, la transformée de Fourier discrète implémentée est une transformée de Fourier discrète directe. Dans un autre mode de réalisation, la transformée de Fourier discrète implémentée est une transformée de Fourier discrète inverse.

Ainsi, quatre modes de réalisation apparaissent ici :

- dans un **premier mode de réalisation,** la conjugaison est appliquée au signal chirp de référence (cas de la figure 3a), et la transformée de Fourier discrète implémentée est une transformée de Fourier discrète directe ;
- dans un **deuxième mode de réalisation,** la conjugaison est appliquée au signal chirp de référence (cas de la figure 3a), et la transformée de Fourier discrète implémentée est une transformée de Fourier discrète inverse ;
- dans un **troisième mode de réalisation,** la conjugaison est appliquée au signal chirp reçu (cas de la figure 3b), et la transformée de Fourier discrète implémentée est une transformée de Fourier discrète directe ;
- dans un **quatrième mode de réalisation,** la conjugaison est appliquée au signal chirp reçu (cas de la figure 3b), et la transformée de Fourier discrète implémentée est une transformée de Fourier discrète inverse.

Dans des variantes, N s'exprime comme une puissance de deux et la transformée de Fourier discrète en question est implémentée comme une transformée de Fourier rapide.

Les N échantillons complexes transformés délivrés par le module de transformée de Fourier discrète 304 sont alors fournis à un module de génération 305 de N composantes de décision représentatives du rang k, dans la constellation de N symboles, du symbole porté par le signal reçu.

Les N composantes sont alors délivrées à un module de décision 306 qui décide le rang k du symbole reçu en fonction de l'indice de la composante qui présente un extremum de valeur parmi les N composantes.

Dans une variante, les N composantes représentatives du rang k du symbole modulant le signal chirp de base prennent en compte l'effet du canal de propagation. Un estimateur de canal 308 estime alors des coefficients de canal sur la base d'échantillons fournis par le module de transformée de Fourier discrète 304 et du rang du symbole reçu correspondant décidé par le module de décision 306.

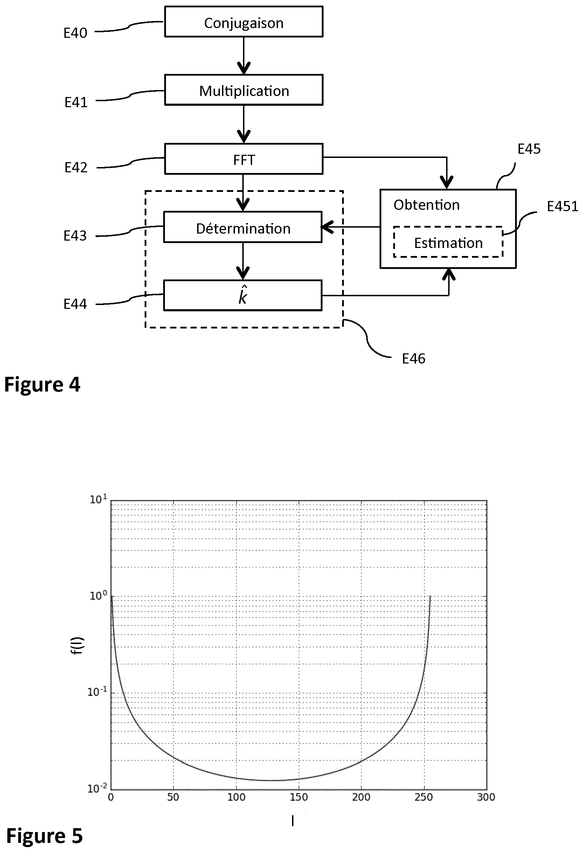

On décrit maintenant, en relation avec la **figure 4** un procédé de démodulation d'un signal reçu, permettant notamment d'estimer un symbole porté par le signal reçu selon différents modes de réalisation de l'invention.

Lors d'une étape E40, un signal chirp conjugué est obtenu. Comme décrit ci-dessus en relation avec les figures 3a et 3b, ce signal chirp conjugué peut correspondre soit au signal résultant de la conjugaison du signal bande de base $s_r(t)$ représentant le chirp de référence d'une durée Ts délivré par le module de génération 307 (premier et deuxième modes de réalisation précités), soit au signal résultant de la conjugaison du signal bande de base $y(t)$ représentant le signal chirp reçu (troisième et quatrième modes de réalisation précités), également d'une durée Ts.

De manière générale, le signal chirp de référence correspond à un signal chirp de base modulé par un symbole de référence de rang r dans la constellation de symbole. Dans une variante, r est pris égal à 0 est le signal chirp de référence est le signal chirp de base.

Lors d'une étape E41, le multiplieur complexe 303 délivre le signal multiplié au module de transformée de Fourier discrète 304.

Dans les premier et deuxième modes de réalisation précités, ce signal multiplié s'exprime ainsi comme $y(t)s_r^*(t)$, et dans les troisième et quatrième modes de réalisation précités, ce signal multiplié s'exprime ainsi comme

$y^*(t)s_r(t)$, i.e. comme le complexe conjugué du signal délivré par le multiplieur complexe 303 dans les premier et deuxième modes de réalisation.

Une expression analytique du produit $y(t)s_r^*(t)$ est tout d'abord dérivée ci-après.

De manière générale, le signal chirp reçu a été propagé via un canal de propagation radioélectrique dont la réponse impulsionnelle $h(t)$ peut s'exprimer classiquement comme une somme de P trajets décalés dans le temps, chaque trajet pouvant alors être modélisé par une amplitude complexe $A_p$ et un délai réel $\tau_p$ de sorte que

$$h(t) = \sum_{p=0}^{P-1} A_p\, \delta(t - \tau_p) \qquad \text{(Eq-3)}$$

avec $\delta(t)$ la distribution de Dirac.

Par ailleurs, le signal reçu est également entaché d'un bruit additif $w(t)$ supposé Gaussien et centré de sorte que l'on peut écrire de manière générale que :

$$y(t) = (h * s_k)(t) + w(t)$$

avec $t \in [0, T_s + \tau_{max}]$ et $\tau_{max} = \tau_{P-1}$, le support de la réponse impulsionnelle $h(t)$ étant $[0, \tau_{max}]$.

Une fois le récepteur synchronisé en temps, on peut alors écrire, en supposant que le signal reçu correspond à un signal chirp de base modulé par un symbole de rang k dans la constellation de symboles, que

$$y(t) = \int_0^{+\infty} h(\tau)s_k(t - \tau)\mathrm{d}\tau + w(t) = \sum_{p=0}^{P-1} A_p\, s_k(t - \tau_p) + w(t)$$

Ainsi, en sortie du multiplieur complexe 303 et dans les premier et deuxième modes de réalisation précités, il apparaît que

$$y(t)s_r^*(t) = \left( \int_0^\infty h(\tau)s_k(t - \tau)\mathrm{d}\tau \right) s_r^*(t) + w(t)s_r^*(t)$$

Lors d'une étape E42, une transformée de Fourier est appliquée par le module de transformée de Fourier discrète 304 afin de délivrer un signal transformé.

Afin de simplifier les écritures, la suite du calcul est présentée pour le cas particulier où le symbole de référence correspond au chirp de base, i.e. pour r=0, quand bien même les résultats seront donnés pour le cas général.

En notant $u = \dfrac{t}{T_s}$ et $u_0 = \dfrac{k}{N} + \dfrac{\tau}{T_s}$ et en définissant $\epsilon$ comme

$$\epsilon = \begin{cases} 0\ si\ (u - u_0) \in [0,1] \\ 1\ si\ (u - u_0) \in [-1,0[ \end{cases}$$

on peut alors utiliser l'expression de $s_k(t)$ donnée par (Eq-2a) pour exprimer $s_k(t - \tau)s^*(t)$ comme

$$s_k(t - \tau)s^*(t) = e^{2j\pi\frac{N\,\sigma}{2}[\overline{\phi}(u-u_0)-\overline{\phi}(u)]}$$
$$= e^{2j\pi\frac{N\,\sigma}{2}[(u-u_0+\epsilon)(u-u_0+\epsilon-1)-(u-1)u]}$$
$$= e^{2j\pi\frac{N\,\sigma}{2}[-2uu_0+2\epsilon u+u_0^2-2\epsilon u_0+u_0+\varepsilon^2-\varepsilon]}$$
$$= e^{j\pi N\,\sigma(u_0^2+u_0)}e^{2j\pi N\,\sigma((\varepsilon-u_0)u-\varepsilon u_0)}$$

Par application d'une transformée de Fourier discrète directe (DFT) sur le signal échantillonné $u_{kn}(\tau) = s_k(nT_c - \tau)s^*(nT_c)$, il apparaît que

$$\mathrm{DFT}\big(\{u_{kn}(\tau)\}_{n=0,\cdots,N-1}\big)_l = U_{kl}(\tau)$$

$$= (-1)^k e^{j\,\sigma\frac{\pi}{N}\left(k+\frac{\tau}{T_c}\right)^2} e^{j\pi\,\sigma\frac{\tau}{T_c}} \left[\sum_{n=0}^{N-1} e^{2j\pi\,\sigma N\left((\varepsilon-u_0)\frac{n}{N}-\varepsilon u_0\right)} e^{-2j\pi\frac{ln}{N}}\right]$$

En notant $q$ le terme $e^{-2j\frac{\pi}{N}\left(\sigma\left(k+\frac{\tau}{T_c}\right)+l\right)}$, il apparaît que

$$\sum_{n=0}^{N-1} e^{2j\pi N\sigma\left((\varepsilon-u_0)\frac{n}{N}-\varepsilon u_0\right)} e^{-2j\pi\frac{ln}{N}}$$

$$= e^{-2j\,\sigma\pi\frac{\tau}{T_c}}\left(\sum_{n=0}^{k} e^{-2j\pi\left(\sigma\left(k+\frac{\tau}{T_c}\right)+l\right)\frac{n}{N}}\right) + \left(\sum_{n=k+1}^{N-1} e^{-2j\pi\left(\sigma\left(k+\frac{\tau}{T_c}\right)+l\right)\frac{n}{N}}\right)$$

$$= e^{-2j\pi\,\sigma\frac{\tau}{T_c}}\left(\sum_{n=0}^{k} q^n\right) + \left(\sum_{n=k+1}^{N-1} q^n\right)$$

$$= \frac{e^{-2j\pi\,\sigma\frac{\tau}{T_c}}\left(1-q^{k+1}\right) + q^{k+1}\left(1-q^{N-k-1}\right)}{1-q}$$

$$= q^{k+1}\frac{\left(1-e^{-2j\pi\,\sigma\frac{\tau}{T_c}}\right)}{(1-q)}$$

Ainsi

$$= N(-1)^k e^{j\,\sigma\frac{\pi}{N}\left(k+\frac{\tau}{T_c}\right)^2} e^{-\frac{2j\pi}{N}\left(\sigma\left(k+\frac{\tau}{T_c}\right)+l\right)\left(k+\frac{1}{2}\right)} \frac{\sin\left(\pi\sigma\frac{\tau}{T_c}\right)}{N\sin\left[\frac{\pi}{N}\left(\sigma\left(k+\frac{\tau}{T_c}\right)+l\right)\right]}$$

Cette équation peut être reformulée de manière à faire apparaître les termes qui dépendent du canal de propagation et ceux liés à la forme d'onde utilisée. Ainsi

$$U_{kl}(\tau) = Ne^{-2j\pi\frac{k(\sigma k+l)}{N}}(-1)^{\sigma k+l}e^{-j\frac{\pi(\sigma k+l)}{N}}$$

$$\times \frac{\sin\left(\pi\left(\sigma k+l+\sigma\frac{\tau}{T_c}\right)\right)}{N\sin\left[\frac{\pi}{N}\left(\sigma k+l+\sigma\frac{\tau}{T_c}\right)\right]} e^{j\frac{\pi}{N}\sigma\left(\left(\frac{\tau}{T_c}\right)^2-\frac{\tau}{T_c}\right)}(-1)^k e^{j\pi\,\sigma\frac{k^2}{N}}$$

On peut alors finalement exprimer les échantillons du signal transformé comme

$$\mathrm{DFT}(\{y(nT_c)s^*(nT_c)\})(l) = Y_l = \sum_{p=0}^{P-1} A_p\,U_{kl}(\tau_p) + \mathrm{DFT}(\{w(nT_c)s^*(nT_c)\})$$

ou sous une autre forme

$$Y_l = N e^{-2j\pi \frac{k(\sigma k + l)}{N}} H_{\sigma k + l[N]} S_k + W_l$$

avec l et k de 0 à N-1 et

$$\mathrm{H}_l = (-1)^l e^{-j\pi \frac{l}{N}} \sum_{p=0}^{P-1} A_p\, e^{j\frac{\pi}{N}\sigma\left(\left(\frac{\tau_p}{T_c}\right)^2 - \frac{\tau_p}{T_c}\right)} \phi_N\left(\sigma \frac{\tau_p}{T_c} + l\right) \quad \text{(Eq-4a)}$$

$$\phi_N(x) = \frac{\sin(\pi x)}{N \sin\left(\frac{\pi x}{N}\right)} \quad \text{(Eq-4b)}$$

$$S_k = (-1)^k e^{j\pi\sigma \frac{k^2}{N}} \quad \text{(Eq-4c)}$$

$$W_l = \mathrm{DFT}\{w(nT_c)s^*(nT_c)\} \quad \text{(Eq-4d)}$$

Dans le cas général où le signal chirp de référence correspond à un signal chirp de base modulé par un symbole de référence de rang r dans la constellation de symboles, le calcul donne pour les N échantillons du signal transformé $Y_l$ obtenus en sortie du module de transformée de Fourier 304 :

- dans le premier mode de réalisation précité (correspondant à l'application d'une transformée de Fourier directe sur $y(nT_c)s_r^*(nT_c)$ et sur $w(nT_c)s_r^*(nT_c)$) :

$$Y_l = N e^{-2j\pi \frac{rl}{N}} e^{-2j\pi \frac{(k-r)(\sigma(k-r)+l)}{N}} H_{\sigma(k-r)+l[N]} S_{k-r[N]} + W_l \quad \text{(Eq-5a)}$$

- dans le deuxième mode de réalisation précité (correspondant à l'application d'une transformée de Fourier inverse sur $y(nT_c)s_r^*(nT_c)$ et sur $w(nT_c)s_r^*(nT_c)$) :  :

$$Y_l = e^{+2j\pi \frac{rl}{N}} e^{-2j\pi \frac{(k-r)(\sigma(k-r)-l)}{N}} H_{\sigma(k-r)-l[N]} S_{k-r[N]} + W_l \quad \text{(Eq-5b)}$$

- dans le troisième mode de réalisation précité (correspondant à l'application d'une transformée de Fourier directe sur $y^*(nT_c)s_r(nT_c)$ et sur $w^*(nT_c)s_r(nT_c)$) :

$$Y_l = N e^{-2j\pi \frac{rl}{N}} e^{+2j\pi \frac{(k-r)(\sigma(k-r)-l)}{N}} H^*_{\sigma(k-r)-l[N]} S^*_{k-r[N]} + W_l \quad \text{(Eq-5c)}$$

- dans le quatrième mode de réalisation précité (correspondant à l'application d'une transformée de Fourier inverse sur $y^*(nT_c)s_r(nT_c)$ et sur $w^*(nT_c)s_r(nT_c)$) :

$$Y_l = e^{+2j\pi \frac{rl}{N}} e^{+2j\pi \frac{(k-r)(\sigma(k-r)+l)}{N}} H^*_{\sigma(k-r)+l[N]} S^*_{k-r[N]} + W_l \quad \text{(Eq-5d)}$$

Par ailleurs, afin de simplifier la lecture, les mêmes notations $Y_l$, $H_l$ et $W_l$ sont utilisées pour désigner les échantillons correspondants obtenus en sortie du module de transformée de Fourier 304 quel que soit le mode de réalisation précité considéré.
Lors d'une étape E43, N composantes de décision $D_l$, l entier de 0 à N-1, pouvant être interprétées comme représentant les N composantes d'un vecteur de décision $(D_0, D_1,...,D_{N-1})$, et représentatives du rang du symbole porté par le signal reçu sont déterminées par un module de génération 305.

Pour ce faire, il est proposé dans un mode de réalisation d'appliquer un critère de maximum de vraisemblance sur les N échantillons $Y_l$ délivrés par le module de transformée de Fourier discrète 304. En effet, l'hypothèse Gaussienne pour le bruit additif $w(nT_c)$ reste vraie pour les échantillons $W_l$ obtenus en sortie du module de transformée de Fourier discrète 304, la transformation de Fourier d'une distribution Gaussienne donnant une autre distribution Gaussienne.

En reconsidérant par exemple le premier mode de réalisation précité (correspondant à l'application d'une transformée de Fourier directe sur $y(nT_c)s_r^*(nT_c)$), et en reconsidérant le cas particulier où le symbole de référence correspond au signal chirp de base, i.e. pour r=0, pour plus de clarté dans les écritures, les échantillons $W_l$ peuvent s'exprimer comme suit sur la base de l'équation (Eq-5a) :

$$W_l = Y_l - N e^{-2j\pi\frac{k(\sigma k+l)}{N}} H_{\sigma k+l[N]} S_k$$

Ainsi, appliquant un critère du maximum de vraisemblance, le rang du symbole modulant le signal chirp de base et correspondant au signal reçu, correspond à l'indice k maximisant la densité de probabilité du symbole observé en réception, ou, s'agissant d'une densité Gaussienne, à l'indice k minimisant l'argument de la fonction Gaussienne, i.e. la quantité

$$\sum_{n=0}^{N-1} \left| Y_n - N e^{-2j\pi\frac{k(\sigma k+n)}{N}} H_{\sigma k+n[N]} S_k \right|^2$$

De manière équivalente, après développement du module au carré et changement de variable de n vers N-n, il apparaît que le rang du symbole correspondant au signal reçu s'exprime en fonction de l'indice k maximisant la quantité

$$\Re\left(\sum_{n=1}^{N} Y_{N-n}^* e^{-2j\pi\sigma\frac{k(\sigma k-n)}{N}} H_{\sigma k-n[N]} S_k\right)$$

où $\Re(.)$ désigne la partie réelle. De manière équivalente, le complexe conjugué de l'argument de la partie réelle cidessus pourrait être pris.

En d'autres termes, N composantes de décision $D_l$, l de 0 à N-1, permettant l'estimation du rang du symbole porté par le signal reçu peuvent être déterminées sur la base de cette expression prise pour les différentes hypothèses de rang de symbole possibles (i.e. les N hypothèses correspondant à k allant de 0 à N-1 dans l'expression ci dessus). Chacune des N composantes de décision $D_l$ correspond alors à la quantité ci-dessus prise pour l'hypothèse de rang de symbole correspondant, et l'estimé $\hat{k}$ du rang du symbole porté par le signal reçu s'exprime alors en fonction de la composante de décision, d'indice k, notée composante $D_k$, présentant un extremum de valeur parmi les N composantes de décision $D_l$ ainsi déterminées.

Dans le cas général où le signal chirp de référence correspond à un signal chirp de base modulé par un symbole de référence de rang r dans la constellation de symboles, un calcul équivalent permet de définir les N composantes de décision $D_l$ obtenues en sortie du module de génération 305, la composante de décision d'indice k, $D_k$, s'exprimant comme:

- dans le premier mode de réalisation précité (correspondant à l'application d'une transformée de Fourier directe sur $y(nT_c)s_r^*(nT_c)$ et sur $w(nT_c)s_r^*(nT_c)$) :

$$D_k = \Re\left(\sum_{n=1}^{N} Y_{N-n}^* e^{2j\pi\frac{rn}{N}} e^{-2j\pi\frac{k(\sigma k-n)}{N}} H_{\sigma k-n[N]} S_k\right) \quad \text{(Eq-6a)}$$

- dans le deuxième mode de réalisation précité (correspondant à l'application d'une transformée de Fourier inverse sur $y(nT_c)s_r^*(nT_c)$ et sur $w(nT_c)s_r^*(nT_c))$ :

$$D_k = \Re\left(\sum_{n=0}^{N-1} Y_n^* e^{2j\pi\frac{rn}{N}} e^{-2j\pi\frac{k(\sigma k - n)}{N}} H_{\sigma k - n[N]} S_k\right) \qquad \text{(Eq-6b)}$$

- dans le troisième mode de réalisation précité (correspondant à l'application d'une transformée de Fourier directe sur $y^*(nT_c)s_r(nT_c)$ et sur $w^*(nT_c)s_r(nT_c)$) :

$$D_k = \Re\left(\sum_{n=0}^{N-1} Y_n^* e^{-2j\pi\frac{rn}{N}} e^{2j\pi\frac{k(\sigma k - n)}{N}} H_{\sigma k - n[N]}^* S_k^*\right) \qquad \text{(Eq-6c)}$$

- dans le quatrième mode de réalisation précité (correspondant à l'application d'une transformée de Fourier inverse sur $y^*(nT_c)s_r(nT_c)$ et sur $w^*(nT_c)s_r(nT_c)$) :

$$D_k = \Re\left(\sum_{n=1}^{N} Y_{N-n}^* e^{-2j\pi\frac{rn}{N}} e^{2j\pi\frac{k(\sigma k - n)}{N}} H_{\sigma k - n[N]}^* S_k^*\right) \qquad \text{(Eq-6d)}$$

Comme discuté ci-dessus, dans des variantes, c'est le complexe conjugué de l'argument de la partie réelle définissant $D_k$ qui est pris dans les équations (Eq-6a) à (Eq-6d).

Dans une variante, le canal de propagation radioélectrique se réduit à un trajet unique (e.g. dans le cas d'une liaison point à point en vue directe). Dans ce cas, la réponse impulsionnelle donnée par l'équation (Eq-3) se réduit à un seul terme d'amplitude $A_0$. De même, dans l'hypothèse d'une synchronisation parfaite du récepteur, on a $\tau_0 = 0$. Il apparaît alors à partir des équations (Eq-4a) et (Eq-4b) que tous les termes $H_l$ sont nuls pour $l$ allant de 1 à N-1, et que seul $H_0$ est non nul.

Ainsi, dans ce cas particulier où le canal de propagation se réduit à un canal AWGN (pour « Additif White Gaussian Noise » en anglais), les N composantes de décision $D_l$ obtenues en sortie du module de génération 305 et données dans le cas général par les équations (Eq-6a) à (Eq-6d) se simplifient et la composante de décision d'indice k, $D_k$, s'exprime comme :

- dans le premier mode de réalisation précité (correspondant à l'application d'une transformée de Fourier directe sur $y(nT_c)s_r^*(nT_c)$ et sur $w(nT_c)s_r^*(nT_c))$ :

$$D_k = \Re\left(Y_{N-\sigma k[N]}^* e^{2j\pi\sigma\frac{rk}{N}} H_0 S_k\right) \qquad \text{(Eq-7a)}$$

- dans le deuxième mode de réalisation précité (correspondant à l'application d'une transformée de Fourier inverse sur $y(nT_c)s_r^*(nT_c)$ et sur $w(nT_c)s_r^*(nT_c))$ :

$$D_k = \Re\left(Y_{\sigma k[N]}^* e^{2j\pi\sigma\frac{rk}{N}} H_0 S_k\right) \qquad \text{(Eq-7b)}$$

- dans le troisième mode de réalisation précité (correspondant à l'application d'une transformée de Fourier directe sur $y^*(nT_c)s_r(nT_c)$ et sur $w^*(nT_c)s_r(nT_c)$) :

$$D_k = \Re\left(Y_{\sigma k[N]}^* e^{-2j\pi\sigma\frac{rk}{N}} H_0^* S_k^*\right) \qquad \text{(Eq-7c)}$$

- dans le quatrième mode de réalisation précité (correspondant à l'application d'une transformée de Fourier inverse sur $y^*(nT_c)s_r(nT_c)$ et sur $w^*(nT_c)s_r(nT_c)$) :

$$D_k = \Re\left(Y^*_{N-\sigma k[N]}e^{-2j\pi\sigma\frac{rk}{N}}H^*_0 S^*_k\right) \qquad \text{(Eq-7d)}$$

Comme discuté ci-dessus, dans des variantes, c'est le complexe conjugué de l'argument de la partie réelle définissant $D_k$ qui est pris dans les équations (Eq-7a) à (Eq-7d).

Il apparaît ainsi sur les équations (Eq-7a) à (Eq-7d) que le récepteur optimal en canal AWGN au sens du maximum de vraisemblance appliqué aux échantillons pris en sortie de transformée de Fourier, directe ou inverse, fait intervenir un terme $S_k$ (dont l'expression est donnée par l'équation (Eq-4c)) dont la phase varie quadratiquement en fonction de l'indice de l'échantillon considéré dans les composantes de décision $D_k$ permettant d'estimer le symbole reçu.

Cette variation quadratique est directement liée à la variation quadratique de la phase instantanée du signal reçu. La prise en compte de la loi de variation particulière de cette phase instantanée permet ainsi d'implémenter le récepteur optimal au sens du maximum de vraisemblance à un coût analytique comparable à celui lié au récepteur de l'état de la technique qui base la décision uniquement sur le module des échantillons en sortie de transformée de Fourier comme décrit dans le document de brevet EP 2 449 690 B1.

Il apparaît également dans ce cas que le seul coefficient lié au canal de propagation présent dans les équations (Eq-7a) à (Eq-7d), i.e. le coefficient $H_0$, se réduit à une constante de normalisation indépendante de l'indice k. Cependant, il apparaît que la phase de ce terme $H_0$ (phase liée au temps de propagation subi par le signal reçu depuis son émission) se retrouve sommée avec la phase d'autres termes dépendant de k dans l'argument de la fonction partie réelle apparaissant dans les équations (Eq-7a) à (Eq-7d). Ainsi, bien qu'indépendant de k, le terme $H_0$ impacte tout de même l'indice k correspondant à la composante de décision $D_k$ présentant un extremum de valeur parmi les N composantes de décision.

Par ailleurs, reconsidérant les équations (Eq-6a) à (Eq-6d), il apparaît maintenant pour un canal présentant des trajets multiples que les termes de couplage de $D_k$ pondérant les échantillons $Y_n$, pour n différent de k, sont proportionnels à un coefficient de canal $H_{\sigma k-n[N]}$ dépendant uniquement de l'écart entre les indices des échantillons de signal considérés en sortie de transformée de Fourier, directe ou inverse. En effet, l'invariance dans le temps de la réponse impulsionnelle du canal conduit à des termes représentatifs de l'interférence entre symboles dépendant uniquement de l'écart entre les indices des échantillons de signal considérés.

Cependant, la variation quadratique de la phase du signal reçu impose que le couplage entre échantillons ne soit pas invariant dans le temps pour un écart donné entre indices d'échantillons considérés. Plus particulièrement, le terme $S_k$ dont la phase varie quadratiquement en fonction de l'indice de l'échantillon considéré, et qui est intrinsèquement lié à la structure même de la forme d'onde utilisée, est ici également présent.

Ainsi, la prise en compte de ces deux effets dans la structure même des N composantes de décision utilisées pour estimer le symbole reçu permet d'implémenter un récepteur au sens du maximum de vraisemblance en présence d'un canal de propagation présentant des trajets multiples, tout en permettant de travailler dans le domaine fréquentiel, i.e. en travaillant sur les échantillons en sortie de transformée de Fourier, directe ou inverse.

Lors d'une étape E44, un estimé $\hat{k}$ du rang k du symbole porté par le signal reçu est décidé à partir de l'indice de la composante de décision $D_k$ qui présente un extremum de valeur parmi les N composantes déterminées lors de l'étape E43. Plus particulièrement, l'estimé $\hat{k}$ correspond à

$$\hat{k} = r + \arg\max_k\{D_k\} \ [N]$$

La combinaison des étapes E43 et E44 permet alors de mettre en œuvre une étape E46 d'estimation du symbole reçu.

Il apparaît à la lumière des expressions des composantes de décision $D_k$ données par les (Eq-6a) à (Eq-6d) ou (Eq-7a) à (Eq-7d), que dans certains modes de réalisation, les coefficients de canal $H_l$, l allant de 0 à N-1, doivent être connus pour la mise en œuvre de l'étape de décision E44 .

Dans un mode de réalisation, les coefficients de canal $H_l$ sont initialisés à une valeur par défaut, e.g. $H_0$ est mis à 1 et les coefficients de canal $H_l$, l allant de 1 à N-1, sont mis à 0 pour permettre l'initialisation de la réception. Ainsi, la réception de premiers symboles peut avoir lieu et une obtention des coefficients de canal $H_l$, l allant de 0 à N-1, peut alors être réalisée, comme décrit ci-dessous en lien avec l'étape E45, pour une mise en œuvre ultérieure de l'étape de décision E44.

Lors d'une étape E45, les N coefficients de canal $H_l$, l allant de 0 à N-1 sont ainsi obtenus.

Dans un mode de réalisation, les caractéristiques du canal de propagation sont connues (e.g. dans une configuration statique) et les N coefficients de canal obtenus correspondent alors à N coefficients de canal prédéterminés qui peuvent être directement chargés à l'initialisation dans le module de décision 306.

Dans un autre mode de réalisation, les caractéristiques du canal de propagation sont inconnues à l'avance (e.g. en cas de mobilité du récepteur et/ou de l'émetteur) et les N coefficients de canal obtenus correspondent à N coefficients de canal $\hat{H}_l$ estimés lors d'une sous-étape E451.

Plus particulièrement, la méthode décrite base cette estimation sur les échantillons délivrés par le module de transformée de Fourier discrète 304 lors d'une mise en œuvre préalable des étapes E40 à E42 ainsi que sur le rang d'au moins un symbole prédéterminé correspondant.

Dans une variante, les symboles prédéterminés en question sont des symboles d'une séquence d'apprentissage (e.g. un préambule ou une séquence d'apprentissage d'une trame radio), permettant par là-même une estimation robuste des coefficients de canal. Dans le cas d'une transmission LoRa®, il s'agit alors d'une pluralité de signaux chirp de base, i.e. correspondant à un symbole de rang 0 dans la constellation, de pente positive ou négative (i.e. la valeur de $\sigma$ varie entre +1 et -1 d'un chirp à l'autre).

Dans une autre variante, les symboles prédéterminés en question sont des symboles de données dont le rang a été préalablement déterminé lors de l'exécution d'une étape E44 précédente, permettant par là-même d'affiner l'estimation des coefficients de canal au cours de la réception.

Dans un mode de réalisation, cette estimation est effectuée sur un seul symbole reçu afin de simplifier cette étape d'estimation et de réduire la consommation globale de l'objet connecté embarquant la technique décrite.

Dans un autre mode de réalisation, cette estimation est effectuée sur la base d'une pluralité de symboles reçus, permettant par là-même de moyenner l'estimation afin de réduire sa variance.

De manière générale, si l'on considère Ns symboles pour estimer les N coefficients de canal $H_l$, l allant de 0 à N-1, en notant $k_i$ le rang du i-ème de ces Ns symboles dans la constellation de N symboles, et $r_i$ le rang du symbole de référence utilisé lors de la réception de ce i-ème symbole, les équations (Eq-5a) à (Eq-5d) nous donnent l'expression des N échantillons du signal transformé $Y_l^{(i)}$, l allant de 0 à N-1, obtenus en sortie du module de transformée de Fourier 304 dans les quatre modes de réalisation précités lors de la réception de ce i-ème symbole.

Par manipulation algébrique, il est possible d'isoler les N coefficients de canal $H_l$ dans ces équations. Ainsi, adoptant une notation vectorielle pour plus de clarté et notant $\underline{H}$ le vecteur dont les composantes sont les N coefficients du canal $H_l$, on peut écrire à partir des équations (Eq-5a) à (Eq-5d) que

$$\underline{Y}'^{(i)} = \underline{H} + \underline{W}'^{(i)} \qquad \text{(Eq-8)}$$

avec

$$\underline{H} = \begin{bmatrix} H_0 \\ H_1 \\ \vdots \\ H_{N-1} \end{bmatrix}$$

et avec les composantes du vecteur $\underline{Y}'^{(i)}$ données par :

- Dans le premier mode de réalisation précité (correspondant à l'application d'une transformée de Fourier directe sur $y(nT_c)s_r^*(nT_c)$ et sur $w(nT_c)s^*(nT_c)$) par :

$$\underline{Y}'^{(i)} = \frac{1}{N} S_{k_i-r_i[N]}^* \begin{bmatrix} e^{+2j\pi\frac{r_i(0-\sigma_i(k_i-r_i))}{N}} e^{2j\pi\frac{(k_i-r_i)\cdot 0}{N}} Y_{0-\sigma_i(k_i-r_i)[N]}^{(i)} \\ e^{+2j\pi\frac{r_i(1-\sigma_i(k_i-r_i))}{N}} e^{2j\pi\frac{(k_i-r_i)\cdot 1}{N}} Y_{1-\sigma_i(k_i-r_i)[N]}^{(i)} \\ \vdots \\ e^{+2j\pi\frac{r_i(N-1-\sigma_i(k_i-r_i))}{N}} e^{2j\pi\frac{(k_i-r_i)\cdot(N-1)}{N}} Y_{N-1-\sigma_i(k_i-r_i)[N]}^{(i)} \end{bmatrix} \qquad \text{(Eq-9a)}$$

- Dans le deuxième mode de réalisation précité (correspondant à l'application d'une transformée de Fourier inverse sur $y(nT_c)s_r^*(nT_c)$ et sur $w(nT_c)s_r^*(nT_c)$) par :

$$\underline{Y}'^{(i)} = S^*_{k_i-r_i[N]} \begin{bmatrix} e^{-2j\pi\frac{r_i(\sigma_i(k_i-r_i)-0)}{N}} e^{2j\pi\frac{(k_i-r_i)\cdot 0}{N}} Y^{(i)}_{\sigma_i(k_i-r_i)-0[N]} \\ e^{-2j\pi\frac{r_i(\sigma_i(k_i-r_i)-1)}{N}} e^{2j\pi\frac{(k_i-r_i)\cdot 1}{N}} Y^{(i)}_{\sigma_i(k_i-r_i)-1[N]} \\ \vdots \\ e^{-2j\pi\frac{r_i(\sigma_i(k_i-r_i)-N+1)}{N}} e^{2j\pi\frac{(k_i-r_i)\cdot(N-1)}{N}} Y^{(i)}_{\sigma_i(k_i-r_i)-N+1[N]} \end{bmatrix} \quad \text{(Eq-9b)}$$

- Dans le troisième mode de réalisation précité (correspondant à l'application d'une transformée de Fourier directe sur $y^*(nT_c)s_f(nT_c)$ et sur $w^*(nT_c)s_f(nT_c)$) par :

$$\underline{Y}'^{(i)} = \frac{1}{N} S^*_{k_i-r_i[N]} \begin{bmatrix} e^{-2j\pi\frac{r_i(\sigma_i(k_i-r_i)-0)}{N}} e^{2j\pi\frac{(k_i-r_i)\cdot 0}{N}} Y^{(i)^*}_{\sigma_i(k_i-r_i)-0[N]} \\ e^{-2j\pi\frac{r_i(\sigma_i(k_i-r_i)-1)}{N}} e^{2j\pi\frac{(k_i-r_i)\cdot 1}{N}} Y^{(i)^*}_{\sigma_i(k_i-r_i)-1[N]} \\ \vdots \\ e^{-2j\pi\frac{r_i(\sigma_i(k_i-r_i)-N+1)}{N}} e^{2j\pi\frac{(k_i-r_i)\cdot(N-1)}{N}} Y^{(i)^*}_{\sigma_i(k_i-r_i)-N+1[N]} \end{bmatrix} \quad \text{(Eq-9c)}$$

- Dans le quatrième mode de réalisation précité (correspondant à l'application d'une transformée de Fourier inverse sur $y^*(nT_c)s_f(nT_c)$ et sur $w^*(nT_c)s_f(nT_c)$) par :

$$\underline{Y}'^{(i)} = S^*_{k_i-r_i[N]} \begin{bmatrix} e^{+2j\pi\frac{r_i(0-\sigma_i(k_i-r_i))}{N}} e^{2j\pi\frac{(k_i-r_i)\cdot 0}{N}} Y^{(i)^*}_{0-\sigma_i(k_i-r_i)[N]} \\ e^{+2j\pi\frac{r_i(1-\sigma_i(k_i-r_i))}{N}} e^{2j\pi\frac{(k_i-r_i)\cdot 1}{N}} Y^{(i)^*}_{1-\sigma_i(k_i-r_i)[N]} \\ \vdots \\ e^{+2j\pi\frac{r_i(N-1-\sigma_i(k_i-r_i))}{N}} e^{2j\pi\frac{(k_i-r_i)\cdot(N-1)}{N}} Y^{(i)^*}_{N-1-\sigma_i(k_i-r_i)[N]} \end{bmatrix} \quad \text{(Eq-9d)}$$

et avec $\underline{W}'^{(i)}$ un vecteur dont la I-ème composantes est proportionnelle à l'échantillon $W_I$ obtenus en sortie du module de transformée de Fourier 304 lors de la réception du i-ème symbole utilisé pour l'estimation du canal. Il apparaît ainsi que $\underline{W}'^{(i)}$ est un vecteur Gaussien blanc et centré.

Le vecteur $\underline{H}$ peut alors être estimé sur la base d'un critère de maximum de vraisemblance. La densité de

$$\underline{\hat{H}} = \begin{bmatrix} \hat{H}_0 \\ \hat{H}_1 \\ \vdots \\ \hat{H}_{N-1} \end{bmatrix}$$

probabilité du vecteur $\underline{W}'^{(i)}$ étant Gaussienne, le vecteur $\qquad$ estimé de H maximisant la densité de probabilité du symbole observé en réception, sachant qu'un symbole de rang k a été émis, correspond au vecteur $\underline{\hat{H}}$ minimisant l'argument de la fonction Gaussienne, i.e. la quantité

$$\sum_{i=0}^{N_s-1} \left\| \underline{Y}'^{(i)} - \underline{\hat{H}} \right\|^2$$

où ||. || désigne la norme Hermitienne.
Après développement du carré de cette norme, il apparaît que $\underline{\hat{H}}$ s'exprime comme la moyenne sur les Ns symboles considérés des vecteurs $\underline{Y}'^{(i)}$, i.e.

$$\widehat{\underline{H}} = \frac{1}{N_s}\sum_{i=0}^{N_s-1}\underline{Y}'^{(i)} \qquad \text{(Eq-9e)}$$

avec le vecteur $\underline{Y}'^{(i)}$ donné par les équations (Eq-9a) à (Eq-9d) suivant le mode de réalisation précité considéré.

On décrit maintenant, en relation avec la **figure 5** une simplification dans l'estimation des paramètres de canal selon un mode de réalisation de l'invention.

Plus particulièrement, reconsidérant les équations (Eq-4a) et (Eq-4b), il apparaît que les variations de l'argument de la fonction $\phi_N(.\,)$, i.e. $\sigma\frac{\tau_p}{T_c} + l$, restent faibles autour de I entier. En effet, dans la technologie LoRa®, $T_c$ est choisit égal à 8µs, ce qui reste faible devant la dispersion observée dans la plupart des canaux de propagation radioélectrique connus (i.e. devant les écarts entre les délais $\tau_p$, p non nul, associés à chaque trajet au-delà du délai de trajet principal, qui est souvent le trajet direct, et le délai de ce trajet principal). A titre d'exemple, les modèles de canaux de propagation en milieu urbain donnés dans le document de standardisation **« 3GPP TS 45.005 V8.8.0** : **3rd Generation Partnership Project; Technical Specification Group GSM/EDGE Radio Access Network; Radio transmission and reception »**, publié par l'ETSI en avril 2010, donnent des écarts de délais, i.e. correspondant à $\tau_p$ - $\tau_0$, inférieurs à 5µs.

De la sorte, supposant une synchronisation parfaite du récepteur, ce qui revient à considérer $\tau_0 = 0$ dans les équations précédentes, un développement limité de $\phi_N(.)$ autour des valeurs de son argument multiple entier conduit à pouvoir exprimer les coefficients de canal $H_l$ pour $l \neq 0$ comme

$$H_l \approx I_0 \frac{\pi}{N\sin\frac{\pi l}{N}} e^{-j\pi\frac{l}{N}} \qquad \text{(Eq-10)}$$

avec $I_0$ un paramètre s'exprimant en fonction des paramètres du canal de propagation comme

$$I_0 = \sum_{p=0}^{P-1} A_p \sigma \frac{\tau_p}{T_c} e^{j\frac{\pi}{N}\sigma\left(\left(\frac{\tau_p}{T_c}\right)^2 - \frac{\tau_p}{T_c}\right)}$$

Il apparaît ainsi que l'ensemble des paramètres $H_l$, I allant de 0 à N-1, peut être déterminé sur la base de seulement deux paramètres, ce qui simplifie drastiquement l'étape d'estimation de canal.

Dans une variante, les deux paramètres en question sont $H_0$ et un autre des $H_l$ avec I différent de zéro. En effet, l'équation (Eq-10) nous montre que les paramètres $H_l$ avec I différent de zéro peuvent être déduits de l'un d'eux. Dans cette variante, le paramètre $H_0$ et le paramètre $H_l$ considéré peuvent être estimés à partir des équations (Eq-9e) et (Eq-9a) à (Eq-9d) suivant le mode de réalisation précité considéré. En effet, ces paramètres $H_0$ et $H_l$ sont respectivement la première et la I-ème composante du vecteur $\underline{H}$ défini ci-dessus et peuvent ainsi être estimés suivant la technique décrite pour estimer ce vecteur.

Dans une autre variante, les deux paramètres en question sont $H_0$ et le paramètre $I_0$ introduit dans l'équation (Eq-10). Le paramètre $I_0$ peut ainsi être alternativement estimé en injectant l'équation (Eq-10) dans l'équation (Eq-8), conduisant à

$$\underline{Y}'^{(i)} = \underline{H} + \underline{W}'^{(i)} = I_0\underline{C} + \underline{W}'^{(i)}$$

avec

$$\underline{C} = \begin{bmatrix} \dfrac{\pi}{N\sin\dfrac{\pi\cdot 1}{N}}e^{-j\pi\frac{1}{N}} \\[2ex] \dfrac{\pi}{N\sin\dfrac{\pi\cdot 2}{N}}e^{-j\pi\frac{2}{N}} \\[2ex] \vdots \\[2ex] \dfrac{\pi}{N\sin\dfrac{\pi(N-1)}{N}}e^{-j\pi\frac{N-1}{N}} \end{bmatrix}$$

Reprenant alors un critère de maximum de vraisemblance appliqué à cette équation pour déterminer le paramètre $I_0$, un calcul similaire à celui décrit ci-dessus en relation avec l'obtention de l'équation (Eq-9e) donne

$$\hat{I}_0 = \frac{1}{\left\|\underline{C}\right\|^2}\,\mathfrak{R}\left(\underline{C}^{*T}\frac{\sum_{i=0}^{N_s-1}\underline{Y}'^{(i)}}{N_s}\right)$$

avec le vecteur $Y'^{(i)}$ donné par l'une des équations (Eq-9a) à (Eq-9d) suivant le mode de réalisation précité considéré, avec $\underline{C}^{*T}$ le vecteur transposé du vecteur $\underline{C}^*$, lui-même étant obtenu en conjuguant chaque composante de $\underline{C}$. $\hat{I}_0$ représente dans cette formule l'estimation de $I_0$.

Dans le mode de réalisation où l'estimation de canal est effectuée sur un seul symbole reçu, les équations ci-dessus restent valables en considérant Ns=1.

Par ailleurs, dans la variante où l'ensemble des paramètres $H_l$, l allant de 0 à N-1, est déterminé sur la base des deux paramètres $H_0$ et $I_0$, les expressions des N composantes de décision $D_l$ obtenues en sortie du module de génération 305 et permettant l'estimation du symbole émis, données dans le cas général par les équations (Eq-6a) à (Eq-6d), se simplifient sur la base de l'équation (Eq-10), et la composante de décision d'indice k, $D_k$, s'exprime comme :

- dans le premier mode de réalisation précité (correspondant à l'application d'une transformée de Fourier directe sur $y(nT_c)s_r^*(nT_c)$ et sur $w(nT_c)s_r^*(nT_c)$) :

$$D_k =$$
$$\mathfrak{R}\left(S_k H_0\left[Y_{N-\sigma k[N]}^* e^{2j\pi\sigma\frac{rk}{N}} + \frac{I_0}{H_0}\sum_{\substack{n=1\\n\neq\sigma k[N]}}^{N} Y_{N-n}^* \frac{\pi}{N\sin\frac{\pi}{N}(\sigma k-n)}e^{2j\pi\frac{rn}{N}}e^{-j\pi\frac{(2k+1)(\sigma k-n)}{N}}\right]\right)$$

(Eq-11a)

- dans le deuxième mode de réalisation précité (correspondant à l'application d'une transformée de Fourier inverse sur $y(nT_c)s_r^*(nT_c)$ et sur $w(nT_c)s_r^*(nT_c)$) :

$$D_k =$$
$$\mathfrak{R}\left(S_k H_0\left[Y_{\sigma k[N]}^* e^{2j\pi\sigma\frac{rk}{N}} + \frac{I_0}{H_0}\sum_{\substack{n=0\\n\neq\sigma k[N]}}^{N-1} Y_n^* \frac{\pi}{N\sin\frac{\pi}{N}(\sigma k-n)}e^{2j\pi\frac{rn}{N}}e^{-j\pi\frac{(2k+1)(\sigma k-n)}{N}}\right]\right)$$

(Eq-11b)

- dans le troisième mode de réalisation précité (correspondant à l'application d'une transformée de Fourier directe sur $y^*(nT_c)s_r(nT_c)$ et sur $w^*(nT_c)s_r(nT_c)$) :

$$D_k = \Re\left(S_k^* H_0^* \left[ Y_{\sigma k[N]}^* e^{-2j\pi\sigma\frac{rk}{N}} + \frac{I_0}{H_0^*} \sum_{\substack{n=0\\n\neq\sigma k[N]}}^{N-1} Y_n^* \frac{\pi}{N\sin\frac{\pi}{N}(\sigma k-n)} e^{-2j\pi\frac{rn}{N}} e^{j\pi\frac{(2k+1)(\sigma k-n)}{N}} \right]\right)$$

(Eq-11c)

- dans le quatrième mode de réalisation précité (correspondant à l'application d'une transformée de Fourier inverse sur $y^*(nT_c)s_r(nT_c)$ et sur $w^*(nT_c)s_r(nT_c)$) :

$$D_k = \Re\left(S_k^* H_0^* \left[ Y_{N-\sigma k[N]}^* e^{-2j\pi\sigma\frac{rk}{N}} + \frac{I_0}{H_0^*} \sum_{\substack{n=1\\n\neq\sigma k[N]}}^{N} Y_{N-n}^* \frac{\pi}{N\sin\frac{\pi}{N}(\sigma k-n)} e^{-2j\pi\frac{rn}{N}} e^{j\pi\frac{(2k+1)(\sigma k-n)}{N}} \right]\right)$$

(Eq-11d)

Comme indiqué précédemment, dans des variantes, c'est le complexe conjugué de l'argument de la partie réelle définissant $D_k$ qui est pris dans les équations (Eq-11a) à (Eq-11d).

Par ailleurs, il apparaît à la lumière de l'équation (Eq-10) (et donc des équations (Eq-11a) à (Eq-11d) dérivées de cette équation (Eq-10)) que l'approximation de la fonction $\phi_N(.)$ (approximation autorisée par le choix d'une valeur du temps chip $T_c$ grande devant les écarts de délai associés à chaque trajet au-delà du délai principal, e.g. comme dans la technologie LoRa®) dans l'expression des coefficients de canal $H_l$, pour l entier non nul, fait apparaître une variation de l'amplitude de ces termes $H_l$ comme la fonction $f(l) = \dfrac{\pi}{N\sin\frac{\pi l}{N}}$ représentée sur la figure 5. Il apparaît ainsi une décroissance exponentielle de l'amplitude des coefficients $H_l$ en fonction de l'indice l, l'amplitude du coefficient $H_{10}$ étant divisée par 10 relativement à celle de $H_1$.

Par conséquent, l'effet du canal peut être correctement modélisé en ne tenant compte que d'un nombre restreint de paramètres $H_l$, par exemple les N' premiers coefficients de canal d'indice l allant de 0 à N'-1, simplifiant par là-même les traitements embarqués dans le récepteur pour la décision des symboles reçus en présence d'un canal de propagation présentant des multi-trajets.

Dans une variante, les N' coefficients de canal ($N' \leq N$) sont obtenus par application de la méthode générale décrite ci-dessus en relation avec les équations (Eq-8) et (Eq-9a) à (Eq-9e) appliquées au vecteur $\underline{H} = \begin{bmatrix} H_0 \\ H_1 \\ \vdots \\ H_{N'-1} \end{bmatrix}$. Les vecteurs $\underline{Y}^{(i)}$ à considérer pour la mise en œuvre de cette méthode, suivant le mode de réalisation parmi les quatre modes de réalisation précités considérés, sont alors ceux donnés par les équations (Eq-9a) à (Eq-9d), mais restreint à leurs N' premiers termes.

Dans une autre variante, les N' coefficients de canal considérés sont déterminés à partir de seulement deux paramètres comme décrit ci-dessus en relation avec les équations (Eq-10) et suivantes (e.g. $H_0$ et un autre des $H_l$ avec l différent de zéro, ou bien $H_0$ et $I_0$). Là encore, les vecteurs considérés doivent être restreints aux N' premiers termes.

Dans encore une autre variante, seuls N' coefficients de canal sont pris en compte parmi les N possibles, mais ce ne sont pas les N' premiers coefficients de canal, i.e. les coefficients de canal d'indice l inférieur à N'. Dans ce cas, la méthode générale décrite ci-dessus en relation avec les équations (Eq-8) et (Eq-9a) à (Eq-9e) s'applique, mais N-N' coefficients de canal correspondant sont présupposés nuls. Il en est de même lorsque les N' coefficients de canal considérés sont déterminés à partir de seulement deux paramètres comme décrit ci-dessus en relation avec les équations (Eq-10) et suivantes. Ceci permet de simplifier la structure de l'organe d'estimation du symbole reçu lorsqu'une caractéristique du canal de propagation peut être présupposée.

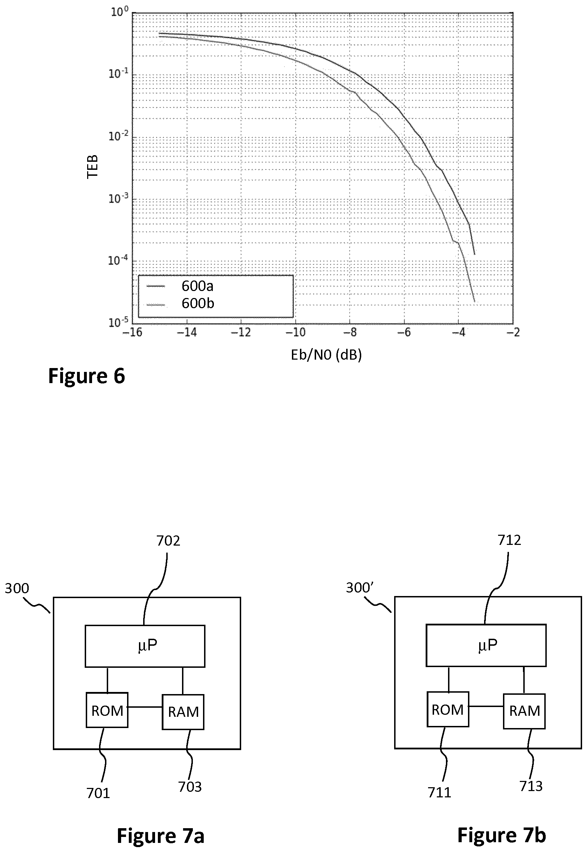

On décrit maintenant, en relation avec la **figure 6** les performances obtenues lorsque la technique décrite est utilisée dans le cas d'un canal de propagation du type AWGN comparativement à celles obtenues lorsque la technique de l'art antérieur est utilisée.

Dans cette situation, l'obtention des coefficients de canal selon la technique décrite effectuée à l'étape E45 se résume à l'obtention d'un seul paramètre $H_0$, les autres termes $H_l$ étant nuls pour l allant de 1 à N-1 comme décrit ci-dessus en relation avec la figure 4. Par ailleurs, la décision du rang des symboles reçus lors de l'étape E44 est basée dans ce cas sur l'utilisation de composantes de décision $D_k$ données par l'équation parmi les équations (Eq-7a) à (Eq-7d) correspondant au mode de réalisation précité considéré, et déterminées lors de l'étape E43.

Selon la technique de l'art antérieur décrite dans le document de brevet EP 2 449 690 B1, le rang du symbole reçu est déterminé uniquement sur la base de l'échantillon en sortie de transformée de Fourier présentant l'amplitude maximale, indépendamment de toute information de phase.

Il apparaît alors que l'utilisation de la technique décrite (courbe 600b), permet un gain de l'ordre de 1 décibel sur le rapport Eb/N0 (i.e. sur le rapport de l'énergie par bit reçu ramené à la densité spectrale de puissance de bruit) nécessaire pour obtenir un taux d'erreur binaire, ou TEB, donné par rapport à la technique connue (courbe 600a).

A TEB donné, un tel gain sur le rapport Eb/N0 se traduit directement sur le rapport signal à bruit requis à l'entrée du récepteur. Il en découle un gain correspondant sur la portée du système global et donc sur la couverture des cellules du réseau considéré. En pratique, 1 décibel de gain sur le rapport signal à bruit à l'entrée du récepteur correspond à un accroissement conséquent de la portée de 12%.

Les gains escomptés lorsque le canal de propagation présente des évanouissements sont encore supérieurs, la technique décrite permettant en effet de corriger l'interférence entre symboles résultant des multi trajets et donc d'améliorer la discrimination entre le symbole émis et ses adjacents.

Les **figures 7a et 7b** présentent des exemples de structures de dispositif de démodulation 300, 300' des symboles reçus permettant la mise en œuvre d'un procédé de démodulation décrit en relation avec la figure 4 selon différents modes de réalisation de l'invention.

Le dispositif de démodulation 300, 300' comprend une mémoire vive 703, 713 (par exemple une mémoire RAM), une unité de traitement 702, 712 équipée par exemple d'un processeur, et pilotée par un programme d'ordinateur stocké dans une mémoire morte 701, 711 (par exemple une mémoire ROM ou un disque dur). A l'initialisation, les instructions de code du programme d'ordinateur sont par exemple chargées dans la mémoire vive 703, 713 avant d'être exécutées par le processeur de l'unité de traitement 702, 712.

Ces figures 7a et 7b illustrent seulement une manière particulière, parmi plusieurs possibles, de réaliser le dispositif de démodulation 300, 300' afin qu'il effectue certaines étapes du procédé détaillé ci-dessus en relation avec la figure 4 (dans l'un quelconque des différents modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif de démodulation 300, 300' est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

**Revendications**

1. Procédé de démodulation d'un signal reçu,
   ledit signal reçu résultant de la modulation d'un signal chirp de base dont une fréquence instantanée (102, 102', 102", 102''') varie linéairement entre une première fréquence instantanée f0 et une deuxième fréquence instantanée f1 pendant un temps symbole Ts, ladite modulation correspondant, pour un symbole de rang s d'une constellation de N symboles, s étant un entier de 0 à N-1, à une permutation circulaire du motif de variation de ladite fréquence instantanée sur ledit temps symbole Ts, obtenue par un décalage temporel de s fois une durée temporelle élémentaire Tc, telle que N*Tc=Ts, et de la transmission du signal chirp modulé dans un canal de transmission,
   **caractérisé en ce qu'**il comprend une étape d'estimation (E46) d'un symbole porté par ledit signal reçu, mettant en œuvre les sous-étapes suivantes, pour N échantillons dudit signal reçu et pour N échantillons d'un signal chirp de référence obtenu en modulant ledit signal chirp de base par un symbole de référence correspondant à un symbole de rang r dans ladite constellation, pris aux mêmes instants multiples de Tc :

   - conjugaison (E40) desdits N échantillons dudit signal chirp de référence, respectivement desdits N échantillons dudit signal reçu, délivrant N échantillons d'un signal chirp conjugué ;
   - multiplication (E41) terme à terme desdits N échantillons dudit signal chirp conjugué par lesdits N échantillons dudit signal reçu, respectivement dudit signal chirp de référence, délivrant N échantillons d'un signal multiplié ;
   - transformation de Fourier (E42) directe ou inverse dudit signal multiplié, délivrant N échantillons $Y_l$ d'un signal transformé, avec I un entier allant de 0 à N-1 ;
   - détermination (E43) de N composantes de décision, à partir desdits N échantillons $Y_l$ du signal transformé, une composante de décision d'indice I, notée composante $D_l$, étant fonction d'un terme dont la phase dépend quadratiquement de I, avec I un entier de 0 à N-1 ;

- décision (E44) du rang $\hat{k}$ du symbole porté par ledit signal reçu, à partir de la composante de décision, d'indice k, notée composante $D_k$, présentant un extremum de valeur parmi lesdites N composantes de décision,

ladite composante $D_k$ étant en outre fonction d'un terme proportionnel à une amplitude de l'échantillon dudit indice k, $Y_k$, parmi lesdits N échantillons $Y_l$ dudit signal transformé, ainsi que de la phase dudit échantillon $Y_k$.

2. Procédé selon la revendication 1,
**caractérisé en ce que** ladite composante $D_k$ est en outre fonction d'un sous-ensemble de N' échantillons $Y_n$ parmi lesdits N échantillons $Y_l$ dudit signal transformé, avec n différent de σk, avec $N' \leq N$, et avec σ un paramètre appartenant à {-1,1}.

3. Procédé selon la revendication 2,
**caractérisé en ce que** le procédé comprend une étape d'obtention (E45) de N coefficients de canal,
**et en ce qu'**un échantillon d'indice n dudit sous-ensemble d'échantillons $Y_n$ est pondéré par un coefficient de couplage proportionnel au coefficient de canal $H_{\sigma k-n[N]}$ dépendant de la différence entre les indices σk et n, et à un terme dont l'argument dépend quadratiquement dudit indice k,
**et en ce que** ledit terme proportionnel à une amplitude de l'échantillon $Y_k$ est un coefficient de canal $H_0$ indépendant de k.

4. Procédé selon la revendication 3,
**caractérisé en ce que** ladite composante $D_k$ est fonction d'un terme proportionnel à :

- la partie réelle de la somme $\sum_{n=1}^{N} Y_{N-n}^* e^{2j\pi\frac{rn}{N}} e^{-2j\pi\frac{k(\sigma k-n)}{N}} H_{\sigma k-n[N]} S_k$, ou du complexe conjugué de ladite somme, lorsque ladite transformation de Fourier est une transformée de Fourier directe et lorsque ledit signal chirp conjugué correspond à la conjugaison dudit signal chirp de référence ; ou

- la partie réelle de la somme $\sum_{n=0}^{N-1} Y_n^* e^{2j\pi\frac{rn}{N}} e^{-2j\pi\frac{k(\sigma k-n)}{N}} H_{\sigma k-n[N]} S_k$, ou du complexe conjugué de ladite somme, lorsque ladite transformation de Fourier est une transformée de Fourier inverse et lorsque ledit signal chirp conjugué correspond à la conjugaison dudit signal chirp de référence ; ou

- la partie réelle de la somme $\sum_{n=0}^{N-1} Y_n^* e^{-2j\pi\frac{rn}{N}} e^{2j\pi\frac{k(\sigma k-n)}{N}} H_{\sigma k-n[N]}^* S_k^*$, ou du complexe conjugué de ladite somme, lorsque ladite transformation de Fourier est une transformée de Fourier directe et lorsque ledit signal chirp conjugué correspond à la conjugaison dudit signal reçu ; ou

- la partie réelle de la somme $\sum_{n=1}^{N} Y_{N-n}^* e^{-2j\pi\frac{rn}{N}} e^{2j\pi\frac{k(\sigma k-n)}{N}} H_{\sigma k-n[N]}^* S_k^*$, ou du complexe conjugué de ladite somme, lorsque ladite transformation de Fourier est une transformée de Fourier inverse et lorsque ledit signal chirp conjugué correspond à la conjugaison dudit signal reçu ;

avec $S_k = (-1)^k e^{j\pi\sigma\frac{k^2}{N}}$ et avec $\sigma$ un paramètre appartenant à {-1,1}.

5. Procédé selon la revendication 4,
**caractérisé en ce que** lesdits coefficients de canal $H_{\sigma k-n[N]}$ sont nuls pour n différent de σk.

6. Procédé selon l'une quelconque des revendications 3 à 5,
**caractérisé en ce que** l'étape d'obtention (E45) comprend en outre une estimation (E451) desdits coefficients de canal à partir desdits N échantillons $Y_n$ dudit signal transformé et d'au moins un symbole $k_i$ prédéterminé.

7. Procédé selon la revendication 6, lesdits coefficients de canal estimés formant un vecteur $\underline{\hat{H}} = \begin{bmatrix} \hat{H}_0 \\ \hat{H}_1 \\ \vdots \\ \hat{H}_{N-1} \end{bmatrix},$ ladite estimation desdits coefficients étant effectuée sur la base de Ns symboles reçus, $k_i$ désignant le rang du i-ème desdits Ns symboles dans la constellation de N symboles, $r_i$ désignant le rang d'un symbole de référence utilisé lors de la réception dudit i-ème symbole, $Y_l^{(i)}$ désignant N échantillons dudit signal transformé obtenu lors de ladite réception dudit i-ème symbole **caractérisé en ce que** ledit vecteur $\hat{\underline{H}}$ s'exprime comme $\hat{\underline{H}} = \frac{1}{N_s}\sum_{i=0}^{N_s-1}\underline{Y}'^{(i)}$ avec

$$\underline{Y}'^{(i)} = \frac{1}{N}S^*_{k_i-r_i[N]}\begin{bmatrix} e^{+2j\pi\frac{r_i(0-\sigma_i(k_i-r_i))}{N}}e^{2j\pi\frac{(k_i-r_i)\cdot0}{N}}Y^{(i)}_{0-\sigma_i(k_i-r_i)[N]} \\ e^{+2j\pi\frac{r_i(1-\sigma_i(k_i-r_i))}{N}}e^{2j\pi\frac{(k_i-r_i)\cdot1}{N}}Y^{(i)}_{1-\sigma_i(k_i-r_i)[N]} \\ \vdots \\ e^{+2j\pi\frac{r_i(N-1-\sigma_i(k_i-r_i))}{N}}e^{2j\pi\frac{(k_i-r_i)\cdot(N-1)}{N}}Y^{(i)}_{N-1-\sigma_i(k_i-r_i)[N]} \end{bmatrix}$$

lorsque ladite transformation de Fourier correspond à une transformée de Fourier directe et lorsque ledit signal chirp conjugué correspond à la conjugaison dudit signal chirp de référence ; ou

$$\underline{Y}'^{(i)} = S^*_{k_i-r_i[N]}\begin{bmatrix} e^{-2j\pi\frac{r_i(\sigma_i(k_i-r_i)-0)}{N}}e^{2j\pi\frac{(k_i-r_i)\cdot0}{N}}Y^{(i)}_{\sigma_i(k_i-r_i)-0[N]} \\ e^{-2j\pi\frac{r_i(\sigma_i(k_i-r_i)-1)}{N}}e^{2j\pi\frac{(k_i-r_i)\cdot1}{N}}Y^{(i)}_{\sigma_i(k_i-r_i)-1[N]} \\ \vdots \\ e^{-2j\pi\frac{r_i(\sigma_i(k_i-r_i)-N+1)}{N}}e^{2j\pi\frac{(k_i-r_i)\cdot(N-1)}{N}}Y^{(i)}_{\sigma_i(k_i-r_i)-N+1[N]} \end{bmatrix}$$

lorsque ladite transformation de Fourier correspond à une transformée de Fourier inverse et lorsque ledit signal chirp conjugué correspond à la conjugaison dudit signal chirp de référence ; ou

$$\underline{Y}'^{(i)} = \frac{1}{N}S^*_{k_i-r_i[N]}\begin{bmatrix} e^{-2j\pi\frac{r_i(\sigma_i(k_i-r_i)-0)}{N}}e^{2j\pi\frac{(k_i-r_i)\cdot0}{N}}Y^{(i)^*}_{\sigma_i(k_i-r_i)-0[N]} \\ e^{-2j\pi\frac{r_i(\sigma_i(k_i-r_i)-1)}{N}}e^{2j\pi\frac{(k_i-r_i)\cdot1}{N}}Y^{(i)^*}_{\sigma_i(k_i-r_i)-1[N]} \\ \vdots \\ e^{-2j\pi\frac{r_i(\sigma_i(k_i-r_i)-N+1)}{N}}e^{2j\pi\frac{(k_i-r_i)\cdot(N-1)}{N}}Y^{(i)^*}_{\sigma_i(k_i-r_i)-N+1[N]} \end{bmatrix}$$

lorsque ladite transformation de Fourier correspond à une transformée de Fourier directe et lorsque ledit signal chirp conjugué correspond à la conjugaison dudit signal reçu ; ou

$$\underline{Y}'^{(i)} = S^*_{k_i-r_i[N]}\begin{bmatrix} e^{+2j\pi\frac{r_i(0-\sigma_i(k_i-r_i))}{N}}e^{2j\pi\frac{(k_i-r_i)\cdot0}{N}}Y^{(i)^*}_{0-\sigma_i(k_i-r_i)[N]} \\ e^{+2j\pi\frac{r_i(1-\sigma_i(k_i-r_i))}{N}}e^{2j\pi\frac{(k_i-r_i)\cdot1}{N}}Y^{(i)^*}_{1-\sigma_i(k_i-r_i)[N]} \\ \vdots \\ e^{+2j\pi\frac{r_i(N-1-\sigma_i(k_i-r_i))}{N}}e^{2j\pi\frac{(k_i-r_i)\cdot(N-1)}{N}}Y^{(i)^*}_{N-1-\sigma_i(k_i-r_i)[N]} \end{bmatrix}$$

lorsque ladite transformation de Fourier correspond à une transformée de Fourier inverse et lorsque ledit signal chirp conjugué correspond à la conjugaison dudit signal reçu ;

avec $S_k = (-1)^k e^{j\pi\sigma\frac{k^2}{N}}$ et avec $\sigma$ un paramètre appartenant à {-1,1}.

**8.** Procédé selon l'une quelconque des revendications 6 ou 7,
**caractérisé en ce que** ladite étape d'estimation desdits coefficients de canal comprend les sous-étapes suivantes :

- calcul de paramètres représentatifs dudit coefficient de canal $\hat{H}_0$ et d'un autre desdits coefficients de canal ;
- obtention de paramètres représentatifs des coefficients de canal restants à partir desdits paramètres calculés.

**9.** Procédé selon l'une quelconque des revendications 3 à 8,

**caractérisé en ce que** ledit coefficient de canal d'indice I non nul est inversement proportionnel à $\sin\frac{\pi l}{N}$.

**10.** Procédé selon l'une quelconque des revendications 6 à 9,

**caractérisé en ce que** ledit symbole prédéterminé est un symbole d'une séquence d'apprentissage ou un symbole reçu dont le rang $\hat{k}$ a été décidé lors d'une exécution précédente de ladite étape d'estimation de symbole.

11. Produit programme d'ordinateur, comprenant des instructions de code de programme pour la mise en œuvre d'un procédé selon l'une quelconque des revendications 1 à 10, lorsque ledit programme est exécuté sur un ordinateur.

12. Dispositif de démodulation (300, 300') d'un signal reçu,
ledit signal reçu résultant de la modulation d'un signal chirp de base dont une fréquence instantanée (102, 102', 102", 102''') varie linéairement entre une première fréquence instantanée f0 et une deuxième fréquence instantanée f1 pendant un temps symbole Ts, ladite modulation correspondant, pour un symbole de rang s d'une constellation de N symboles, s étant un entier de 0 à N-1, à une permutation circulaire du motif de variation de ladite fréquence instantanée sur ledit temps symbole Ts, obtenue par un décalage temporel de s fois une durée temporelle élémentaire Tc, telle que N*Tc=Ts, et de la transmission du signal chirp modulé dans un canal de transmission,
**caractérisé en ce qu'**il comprend une machine (702, 712) de calcul reprogrammable ou une machine (702, 712) de calcul dédiée, apte à et configurée pour, pour N échantillons dudit signal reçu et pour N échantillons d'un signal chirp de référence obtenu en modulant ledit signal chirp de base par un symbole de référence correspondant à un symbole de rang r dans ladite constellation, pris aux mêmes instants multiples de Tc :

- conjuguer lesdits N échantillons dudit signal chirp de référence, respectivement desdits N échantillons dudit signal reçu, pour délivrer N échantillons d'un signal chirp conjugué ;
- multiplier terme à terme lesdits N échantillons dudit signal chirp conjugué par lesdits N échantillons dudit signal reçu, respectivement dudit signal chirp de référence, pour délivrer N échantillons d'un signal multiplié ;
- exécuter une transformation de Fourier directe ou inverse dudit signal multiplié, pour délivrer N échantillons $Y_l$ d'un signal transformé, avec I un entier allant de 0 à N-1;
- déterminer de N composantes de décision, à partir desdits N échantillons $Y_l$ du signal transformé, une composante de décision d'indice I, notée composante $D_l$, étant fonction d'un terme dont la phase dépend quadratiquement de I, avec I un entier de 0 à N-1 ;
- décider du rang $\hat{k}$ du symbole porté par ledit signal reçu, à partir de la composante de décision, d'indice k, notée composante $D_k$, présentant un extremum de valeur parmi lesdites N composantes de décision,

ladite composante $D_k$ étant en outre fonction d'un terme proportionnel à une amplitude de l'échantillon dudit indice k, $Y_k$, parmi lesdits N échantillons $Y_l$ dudit signal transformé, ainsi que de la phase dudit échantillon $Y_k$.

## Patentansprüche

1. Verfahren zum Demodulieren eines empfangenen Signals, wobei das empfangene Signal sich aus der Modulation eines Chirp-Basissignals ergibt, bei dem eine aktuelle Frequenz (102, 102', 102", 102''') linear zwischen einer ersten aktuellen Frequenz f0 und einer zweiten aktuellen Frequenz f1 während einer Symbolzeit Ts variiert, wobei für ein Symbol vom Rang s einer Konstellation von N Symbolen, wobei s eine ganze Zahl von 0 bis N-1 ist, die Modulation einer Kreispermutation des Variationsmusters der aktuellen Frequenz über die Symbolzeit Ts entspricht, welche sich durch eine zeitliche Verschiebung von s-mal einer elementaren Zeitdauer Tc, bei der N*Tc=Ts, und der Übertragung des in einem Übertragungskanal modulierten Chirp-Signals ergibt, **dadurch gekennzeichnet, dass** es einen Schritt der Schätzung (E46) eines von dem empfangenen Signal übertragenen Symbols umfasst, bei dem für N Proben des empfangenen Signals und für N Proben eines Chirp-Referenzsignals, das sich durch Modulation des Chirp-Basissignals mit einem einem Symbol vom Rang r in der Konstellation entsprechenden Referenzsymbol ergibt, wobei die Proben zu denselben multiplen Tc-Zeitpunkten gewonnen werden, die folgenden Teilschritte durchgeführt werden :

- Konjugation (E40) der N Proben des Chirp-Referenzsignals bzw. der N Proben des empfangenen Signals, woraus sich N Proben eines konjugierten Chirp-Signals ergeben,
- Term-für-Term-Multiplikation (E41) der N Proben des konjugierten Chirp-Signals mit den N Proben des empfangenen Signals bzw. des Chirp-Referenzsignals, woraus sich N Proben eines multiplizierten Signals ergeben,
- direkte oder inverse Fourier-Transformation (E42) des multiplizierten Signals, woraus sich N Proben $Y_l$ eines transformierten Signals ergeben, wobei I eine ganze Zahl von 0 bis N-1 ist,
- Festlegung (E43) von N Entscheidungskomponenten ausgehend von den N Proben $Y_l$ des transformierten Signals,
wobei eine Entscheidungskomponente mit dem Index I, als Komponente $D_l$ bezeichnet, von einem Term abhängt, dessen Phase quadratisch von I abhängt, wobei I eine ganze Zahl von 0 bis N-1 ist,
- Festsetzung (E44) des Rangs $\hat{k}$ des von dem empfangenen Signal übertragenen Symbols ausgehend von der Entscheidungskomponente mit dem Index k, als Komponente $D_k$ bezeichnet, die einem Extremwert aus den N Entscheidungskomponenten entspricht,

wobei die Komponente $D_k$ ferner von einem Term, der proportional ist zu einer Amplitude der Probe mit dem Index k, $Y_k$, aus den N Proben $Y_l$ des transformierten Signals, sowie von der Phase der Probe $Y_k$ abhängt.

2. Verfahren nach Anspruch 1,
   **dadurch gekennzeichnet, dass** die Komponente $D_k$ ferner von einer Teilmenge von N' Proben $Y_n$ aus den N Proben $Y_l$ des transformierten Signals abhängt, wobei n ungleich σk ist, mit $N' \le N$ und wobei σ ein Parameter aus {-1,1} ist.

3. Verfahren nach Anspruch 2,
   **dadurch gekennzeichnet, dass** das Verfahren einen Schritt der Gewinnung (E45) von N Kanalkoeffizienten umfasst,
   **und dass** eine Probe mit dem Index n der Teilmenge von Proben $Y_n$ mit einem Kopplungskoeffizienten gewichtet ist, der proportional ist zu dem Kanalkoeffizienten $H_{σk-n[N]}$, welcher von der Differenz zwischen den Indizes σk und n abhängt, und zu einem Term, dessen Argument quadratisch vom Index k abhängt,
   **und dass** der zu einer Amplitude der Probe $Y_k$ proportionale Term ein von k unabhängiger Kanalkoeffizient $H_0$ ist.

4. Verfahren nach Anspruch 3,
   **dadurch gekennzeichnet, dass** die Komponente $D_k$ von einem Term abhängt, der proportional ist zu:

   - dem Realteil der Summe $\sum_{n=1}^{N} Y_{N-n}^* e^{2j\pi \frac{rn}{N}} e^{-2j\pi \frac{k(\sigma k - n)}{N}} H_{\sigma k - n[N]} S_k$ oder des konjugierten Komplexes der Summe, wenn die Fourier-Transformation eine direkte Fourier-Transformierte ist und wenn das konjugierte Chirp-Signal der Konjugation des Chirp-Referenzsignals entspricht oder

   - dem Realteil der Summe $\sum_{n=0}^{N-1} Y_n^* e^{2j\pi \frac{rn}{N}} e^{-2j\pi \frac{k(\sigma k - n)}{N}} H_{\sigma k - n[N]} S_k$ oder des konjugierten Komplexes der Summe, wenn die Fourier-Transformation eine inverse Fourier-Transformierte ist und wenn das konjugierte Chirp-Signal der Konjugation des Chirp-Referenzsignals entspricht oder

   - dem Realteil der Summe $\sum_{n=0}^{N-1} Y_n^* e^{-2j\pi \frac{rn}{N}} e^{2j\pi \frac{k(\sigma k - n)}{N}} H_{\sigma k - n[N]}^* S_k^*$ oder des konjugierten Komplexes der Summe, wenn die Fourier-Transformation eine direkte Fourier-Transformierte ist und wenn das konjugierte Chirp-Signal der Konjugation des empfangenen Signals entspricht oder

   - dem Realteil der Summe $\sum_{n=1}^{N} Y_{N-n}^* e^{-2j\pi \frac{rn}{N}} e^{2j\pi \frac{k(\sigma k - n)}{N}} H_{\sigma k - n[N]}^* S_k^*$ oder des konjugierten Komplexes der Summe, wenn die Fourier-Transformation eine inverse Fourier-Transformierte ist und wenn das konjugierte Chirp-Signal der Konjugation des empfangenen Signals entspricht,

   mit $S_k = (-1)^k e^{j\pi\sigma \frac{k^2}{N}}$ und wobei $\sigma$ ein Parameter aus {-1,1} ist.

5. Verfahren nach Anspruch 4,
   **dadurch gekennzeichnet, dass** die Kanalkoeffizienten $H_{σk-n[N]}$ gleich null sind, wenn n ungleich σk ist.

6. Verfahren nach einem beliebigen der Ansprüche 3 bis 5,
   **dadurch gekennzeichnet, dass** der Schritt der Gewinnung (E45) ferner eine Schätzung (E451) der Kanalkoeffizienten ausgehend von den N Proben $Y_n$ des transformierten Signals und von mindestens einem vorbestimmten Symbol $k_i$ umfasst.

7. Verfahren nach Anspruch 6, wobei die geschätzten Kanalkoeffizienten einen Vektor $\underline{\hat{H}} = \begin{bmatrix} \hat{H}_0 \\ \hat{H}_1 \\ \vdots \\ \hat{H}_{N-1} \end{bmatrix}$ bilden, wobei die Schätzung der Koeffizienten aufgrund der Ns empfangenen Symbole erfolgt, wobei $k_i$ den Rang des i-ten von den Ns Symbolen in der Konstellation von N Symbolen bezeichnet, wobei $r_i$ die Rangordnung eines Referenzsymbols bezeichnet, das bei dem Empfang des i-ten Symbols verwendet wird, wobei $Y_l^{(i)}$ N Proben des transformierten Signals bezeichnet, das bei dem Empfang des i-ten Symbols gewonnen wird,

**dadurch gekennzeichnet, dass** der Vektor $\hat{\underline{H}}$ als $\hat{\underline{H}} = \frac{1}{N_s}\sum_{i=0}^{N_s-1}\underline{Y}'^{(i)}$ angegeben wird mit

$$\underline{Y}'^{(i)} = \frac{1}{N}S^*_{k_i-r_i[N]}\begin{bmatrix} e^{+2j\pi\frac{r_i(0-\sigma_i(k_i-r_i))}{N}}e^{2j\pi\frac{(k_i-r_i)\cdot 0}{N}}Y^{(i)}_{0-\sigma_i(k_i-r_i)[N]} \\ e^{+2j\pi\frac{r_i(1-\sigma_i(k_i-r_i))}{N}}e^{2j\pi\frac{(k_i-r_i)\cdot 1}{N}}Y^{(i)}_{1-\sigma_i(k_i-r_i)[N]} \\ \vdots \\ e^{+2j\pi\frac{r_i(N-1-\sigma_i(k_i-r_i))}{N}}e^{2j\pi\frac{(k_i-r_i)\cdot(N-1)}{N}}Y^{(i)}_{N-1-\sigma_i(k_i-r_i)[N]} \end{bmatrix}$$ wenn die Fourier-Transformation einer direkten Fourier-Transformierten entspricht und wenn das konjugierte Chirp-Signal der Konjugation des Chirp-Referenzsignals entspricht oder

$$\underline{Y}'^{(i)} = S^*_{k_i-r_i[N]}\begin{bmatrix} e^{-2j\pi\frac{r_i(\sigma_i(k_i-r_i)-0)}{N}}e^{2j\pi\frac{(k_i-r_i)\cdot 0}{N}}Y^{(i)}_{\sigma_i(k_i-r_i)-0[N]} \\ e^{-2j\pi\frac{r_i(\sigma_i(k_i-r_i)-1)}{N}}e^{2j\pi\frac{(k_i-r_i)\cdot 1}{N}}Y^{(i)}_{\sigma_i(k_i-r_i)-1[N]} \\ \vdots \\ e^{-2j\pi\frac{r_i(\sigma_i(k_i-r_i)-N+1)}{N}}e^{2j\pi\frac{(k_i-r_i)\cdot(N-1)}{N}}Y^{(i)}_{\sigma_i(k_i-r_i)-N+1[N]} \end{bmatrix}$$ wenn die Fourier-Transformation einer inversen Fourier-Transformierten entspricht und wenn das konjugierte Chirp-Signal der Konjugation des Chirp-Referenzsignals entspricht oder

$$\underline{Y}'^{(i)} = \frac{1}{N}S^*_{k_i-r_i[N]}\begin{bmatrix} e^{-2j\pi\frac{r_i(\sigma_i(k_i-r_i)-0)}{N}}e^{2j\pi\frac{(k_i-r_i)\cdot 0}{N}}Y^{(i)*}_{\sigma_i(k_i-r_i)-0[N]} \\ e^{-2j\pi\frac{r_i(\sigma_i(k_i-r_i)-1)}{N}}e^{2j\pi\frac{(k_i-r_i)\cdot 1}{N}}Y^{(i)*}_{\sigma_i(k_i-r_i)-1[N]} \\ \vdots \\ e^{-2j\pi\frac{r_i(\sigma_i(k_i-r_i)-N+1)}{N}}e^{2j\pi\frac{(k_i-r_i)\cdot(N-1)}{N}}Y^{(i)*}_{\sigma_i(k_i-r_i)-N+1[N]} \end{bmatrix}$$ wenn die Fourier-Transformation eine direkte Fourier-Transformierte ist und wenn das konjugierte Chirp-Signal der Konjugation des empfangenen Signals entspricht oder

$$\underline{Y}'^{(i)} = S^*_{k_i-r_i[N]}\begin{bmatrix} e^{+2j\pi\frac{r_i(0-\sigma_i(k_i-r_i))}{N}}e^{2j\pi\frac{(k_i-r_i)\cdot 0}{N}}Y^{(i)*}_{0-\sigma_i(k_i-r_i)[N]} \\ e^{+2j\pi\frac{r_i(1-\sigma_i(k_i-r_i))}{N}}e^{2j\pi\frac{(k_i-r_i)\cdot 1}{N}}Y^{(i)*}_{1-\sigma_i(k_i-r_i)[N]} \\ \vdots \\ e^{+2j\pi\frac{r_i(N-1-\sigma_i(k_i-r_i))}{N}}e^{2j\pi\frac{(k_i-r_i)\cdot(N-1)}{N}}Y^{(i)*}_{N-1-\sigma_i(k_i-r_i)[N]} \end{bmatrix}$$ wenn die Fourier-Transformation eine inverse Fourier-Transformierte ist und wenn das konjugierte Chirp-Signal der Konjugation des empfangenen Signals entspricht mit $S_k = (-1)^k e^{j\pi\sigma\frac{k^2}{N}}$ und wobei $\sigma$ ein Parameter aus {-1,1} ist.

**8.** Verfahren nach einem beliebigen der Ansprüche 6 oder 7,
**dadurch gekennzeichnet, dass** der Schritt der Schätzung der Kanalkoeffizienten die folgenden Teilschritte umfasst:

- Berechnung von für den Kanalkoeffizienten $\hat{H}_0$ und für einen anderen der Kanalkoeffizienten repräsentativen Parametern,
- Gewinnung von für die restlichen Kanalkoeffizienten repräsentativen Parametern ausgehend von den berechneten Parametern.

**9.** Verfahren nach einem beliebigen der Ansprüche 3 bis 8,
**dadurch gekennzeichnet, dass** der Kanalkoeffizient mit dem Index I nicht gleich Null umgekehrt proportional zu

$$\sin \frac{\pi l}{N} \text{ ist.}$$

**10.** Verfahren nach einem beliebigen der Ansprüche 6 bis 9,
**dadurch gekennzeichnet, dass** das vorbestimmte Symbol ein Symbol einer Trainingssequenz oder ein empfangenes Symbol ist, dessen Rang *k* bei einer vorangehenden Ausführung des Schritts der Symbolschätzung festgelegt wurde.

**11.** Computerprogrammprodukt, umfassend Programmcodebefehle für die Durchführung eines Verfahrens nach einem beliebigen der Ansprüche 1 bis 10, wenn das Programm auf einem Computer ausgeführt wird.

**12.** Vorrichtung für die Demodulation (300, 300') eines empfangenen Signals, wobei das empfangene Signal sich aus der Modulation eines Chirp-Basissignals ergibt, bei dem eine aktuelle Frequenz (102, 102', 102", 102''') linear zwischen einer ersten aktuellen Frequenz f0 und einer zweiten aktuellen Frequenz f1 während einer Symbolzeit Ts variiert, wobei für ein Symbol vom Rang s einer Konstellation von N Symbolen, wobei s eine ganze Zahl von 0 bis N-1 ist, die Modulation einer Kreispermutation des Variationsmusters der aktuellen Frequenz über die Symbolzeit Ts entspricht, welche sich durch eine zeitliche Verschiebung von s-mal einer elementaren Zeitdauer Tc, bei der N*Tc=Ts, und der Übertragung des in einem Übertragungskanal modulierten Chirp-Signals ergibt,
**dadurch gekennzeichnet, dass** sie eine umprogrammierbare Rechenmaschine (702, 712) oder eine dedizierte Rechenmaschine (702, 712), die dazu geeignet und dafür eingerichtet ist, für N Proben des empfangenen Signals und für N Proben eines Chirp-Referenzsignals, das sich durch Modulation des Chirp-Basissignals mit einem einem Symbol vom Rang r in der Konstellation entsprechenden Referenzsymbol ergibt, wobei die Proben zu denselben multiplen Tc-Zeitpunkten gewonnen werden:

- Konjugieren der N Proben des Chirp-Referenzsignals bzw. der N Proben des empfangenen Signals, woraus sich N Proben eines konjugierten Chirp-Signals ergeben,
- Multiplizieren Term für Term der N Proben des konjugierten Chirp-Signals mit den N Proben des empfangenen Signals bzw. des Chirp-Referenzsignals, woraus sich N Proben eines multiplizierten Signals ergeben,
- Durchführen einer direkten oder inversen Fourier-Transformation des multiplizierten Signals, woraus sich N Proben $Y_l$ eines transformierten Signals ergeben, wobei I eine ganze Zahl von 0 bis N-1 ist,
- Festlegen von N Entscheidungskomponenten ausgehend von den N Proben $Y_l$ des transformierten Signals, wobei eine Entscheidungskomponente mit dem Index I, als Komponente $D_l$ bezeichnet, von einem Term abhängt, dessen Phase quadratisch von I abhängt, wobei I eine ganze Zahl von 0 bis N-1 ist,
- Festsetzen des Rangs $\hat{k}$ des von dem empfangenen Signal getragenen Symbols ausgehend von der Entscheidungskomponente mit dem Index k, als Komponente $D_k$ bezeichnet, die einem Extremwert aus den N Entscheidungskomponenten entspricht,

wobei die Komponente $D_k$ ferner von einem Term, der proportional ist zu einer Amplitude der Probe mit dem Index k, $Y_k$, aus den N Proben $Y_l$ des transformierten Signals, sowie von der Phase der Probe $Y_k$ abhängt.

## Claims

**1.** Method for demodulating a received signal, the said received signal resulting from the modulation of a basic chirp signal whose instantaneous frequency (102, 102', 102", 102''') varies linearly between a first instantaneous frequency f0 and a second instantaneous frequency f1 during a symbol time Ts, the said modulation corresponding, for a symbol of rank s of a constellation of N symbols, s being an integer from 0 to N-1, to a circular permutation of the variation pattern of the said instantaneous frequency on the said symbol time Ts, obtained by a time shift of s times an elementary time duration Tc, such that N*Tc=Ts, and the transmission of the modulated chirp signal in a transmission channel,
**characterised in that** it comprises an estimate step (E46) of a symbol carried by the said received signal, implementing the following sub-steps, for N samples of the said received signal and for N samples of a reference chirp signal obtained by modulating the said basic chirp signal by a reference symbol corresponding to a symbol of rank r in the said constellation, taken at the same multiple times of Tc:

- conjugation (E40) of the said N samples of the said reference chirp signal, respectively of the said N samples of the said received signal, delivering N samples of a conjugated chirp signal;

- multiplication (E41) term by term of the said N samples of the said conjugated chirp signal by the said N samples of the said received signal, respectively of the said reference chirp signal, delivering N samples of a multiplied signal;
- direct or inverse Fourier transformation (E42) of the said multiplied signal, delivering N samples $Y_l$ of a transformed signal, where I is an integer ranging from 0 to N-1;
- determination (E43) of N decision components, from the said N samples $Y_l$ of the transformed signal, a decision component of index I, denoted as component $D_l$, being a function of a term whose phase depends quadratically on I, where I is an integer from 0 to N-1;
- decision (E44) of rank $k$ of the symbol carried by the said signal received, from the decision component of index k denoted as component $D_k$, having an extreme value among the said N decision components,

the said component $D_k$ being furthermore a function of a term proportional to an amplitude of the sample of the said index k, $Y_k$, among the said N samples $Y_k$ of the said transformed signal, as well as of the phase of the said sample $Y_k$.

2. Method according to claim 1,
   **characterised in that** the said component $D_k$ is also a function of a subset of N samples $Y_n$ among the said N samples $Y_l$ of the said transformed signal, where n is different from ok, where $N' \leq N$, and where $\sigma$ is a parameter belonging to {-1,1}.

3. Method according to claim 2,
   **characterised in that** the method comprises a step of obtaining (E45) N channel coefficients, and **in that** a sample of index n of the said subset of samples $Y_n$ is weighted by a coupling coefficient proportional to the channel coefficient $H_{\sigma k-n[N]}$ dependent on the difference between the indices $\sigma k$ and n, and to a term whose argument depends quadratically on the said index k,
   and **in that** the said term proportional to an amplitude of the sample $Y_k$ is a channel coefficient $H_0$ independent of k.

4. Method according to claim 3,
   **characterised in that** the said component $D_k$ is a function of a term proportional to:
   - the real part of the sum $\sum_{n=1}^{N} Y_{N-n}^* \, e^{2j\pi\frac{rn}{N}} e - 2j\pi \frac{k(\sigma k-n)}{N} H_{\sigma k-n[N]} S_k$, or of the conjugate complex of the said sum, when the said Fourier transformation is a direct Fourier transform and when the said conjugated chirp signal corresponds to the conjugation of the said reference chirp signal; or
   - the real part of the sum $\sum_{n=0}^{N-1} Y_n^* e^{2j\pi\frac{rn}{N}} e^{-2j\pi \frac{k(\sigma k-n)}{N}} H_{\sigma k-n[N]} S_k$, or of the conjugate complex of the said sum, when the said Fourier transformation is an inverse Fourier transform and when the said conjugated chirp signal corresponds to the conjugate of the said reference chirp signal; or
   - the real part of the complex $\sum_{n=0}^{N-1} Y_n^* e^{-2j\pi\frac{rn}{N}} e^{2j\pi \frac{k(\sigma k-n)}{N}} H^*_{\sigma k-n[N]} S_k^*$, or of the conjugate complex of the said sum, when the said Fourier transformation is a direct Fourier transform and when the said conjugated chirp signal corresponds to the conjugation of the said received signal; or
   - the real part of the sum $\sum_{n=1}^{N} Y_{N-n}^* e^{-2j\pi\frac{rn}{N}} e^{2j\pi \frac{k(\sigma k-n)}{N}} H^*_{\sigma k-n[N]} S_k^*$, or of the conjugate complex of the said sum, when the said Fourier transformation is an inverse Fourier transform and when the said conjugated chirp signal corresponds to the conjugation of the said received signal;

   where $S_k = (-1)^k e^{j\pi\sigma\frac{k^2}{N}}$ and where $\sigma$ is a parameter belonging to {-1. 1}

5. Method according to claim 4,
   **characterised in that** the said channel coefficients $H_{\sigma k-n[N]}$ are zero for n different from ok.

6. Method according to any one of claims 3 to 5,
   **characterised in that** the obtaining step (E45) further comprises an estimate (E451) of the said channel coefficients from the said N samples $Y_n$ of the said transformed signal and at least one predetermined symbol k,.

**7.**

$$\underline{\widehat{H}} = \begin{bmatrix} \widehat{H}_0 \\ \widehat{H}_1 \\ \vdots \\ \widehat{H}_{N-1} \end{bmatrix},$$

Method according to claim 6, the said estimated channel coefficients forming a vector the said estimate of the said coefficients being performed based on the Ns symbols received, $k_i$ denoting the rank of the i-th of the said Ns symbols in the constellation of N symbols, $r_i$ denoting the rank of a reference symbol used when receiving the said i-th symbol, $Y_t^{(i)}$ denoting N samples of the said transformed signal obtained during the said reception of the i-th symbol, **characterised in that** the said vector $\widehat{H}$ is expressed as $\underline{\widehat{H}} = \frac{1}{N_S} \sum_{i=0}^{N_S-1} \underline{Y}'^{(i)}$ where

$$\underline{Y}'^{(i)} = \frac{1}{N} S^*_{k_i-r_i[N]} \begin{bmatrix} e^{+2j\pi\frac{r_i\left(0-\sigma_i(k_i-r_i)\right)}{N}} e^{2j\pi\frac{(k_i-r_i)\cdot 0}{N}} Y^{(i)}_{0-\sigma_i(k_i-r_i)[N]} \\ e^{+2j\pi\frac{r_i\left(1-\sigma_i(k_i-r_i)\right)}{N}} e^{2j\pi\frac{(k_i-r_i)\cdot 1}{N}} Y^{(i)}_{1-\sigma_i(k_i-r_i)[N]} \\ \vdots \\ e^{+2j\pi\frac{r_i\left(N-1-\sigma_i(k_i-r_i)\right)}{N}} e^{2j\pi\frac{(k_i-r_i)\cdot(N-1)}{N}} Y^{(i)}_{N-1-\sigma_i(k_i-r_i)[N]} \end{bmatrix}$$

when the said Fourier transformation corresponds to a direct Fourier transform and when the said conjugate chirp signal corresponds to the conjugation of the said reference chirp signal; or

$$\underline{Y}'^{(i)} = S^*_{k_i-r_i[N]} \begin{bmatrix} e^{-2j\pi\frac{r_i\left(\sigma_i(k_i-r_i)-0\right)}{N}} e^{2j\pi\frac{(k_i-r_i)\cdot 0}{N}} Y^{(i)}_{\sigma_i(k_i-r_i)-0[N]} \\ e^{-2j\pi\frac{r_i\left(\sigma_i(k_i-r_i)-1\right)}{N}} e^{2j\pi\frac{(k_i-r_i)\cdot 1}{N}} Y^{(i)}_{\sigma_i(k_i-r_i)-1[N]} \\ \vdots \\ e^{-2j\pi\frac{r_i\left(\sigma_i(k_i-r_i)-N+1\right)}{N}} e^{2j\pi\frac{(k_i-r_i)\cdot(N-1)}{N}} Y^{(i)}_{\sigma_i(k_i-r_i)-N+1[N]} \end{bmatrix}$$

when said Fourier transformation corresponds to an inverse Fourier transform and when the said conjugate chirp signal corresponds to the conjugation of the said reference chirp signal; or

$$\underline{Y}'^{(i)} = \frac{1}{N} S^*_{k_i-r_i[N]} \begin{bmatrix} e^{-2j\pi\frac{r_i\left(\sigma_i(k_i-r_i)-0\right)}{N}} e^{2j\pi\frac{(k_i-r_i)\cdot 0}{N}} Y^{(i)*}_{\sigma_i(k_i-r_i)-0[N]} \\ e^{-2j\pi\frac{r_i\left(\sigma_i(k_i-r_i)-1\right)}{N}} e^{2j\pi\frac{(k_i-r_i)\cdot 1}{N}} Y^{(i)*}_{\sigma_i(k_i-r_i)-1[N]} \\ \vdots \\ e^{-2j\pi\frac{r_i\left(\sigma_i(k_i-r_i)-N+1\right)}{N}} e^{2j\pi\frac{(k_i-r_i)\cdot(N-1)}{N}} Y^{(i)*}_{\sigma_i(k_i-r_i)-N+1[N]} \end{bmatrix}$$

when the said Fourier transformation corresponds to a direct Fourier transform and when the said conjugate chirp signal corresponds to the conjugation of the said received signal; or

$$\underline{Y}'^{(i)} = S^*_{k_i-r_i[N]} \begin{bmatrix} e^{+2j\pi\frac{r_i\left(0-\sigma_i(k_i-r_i)\right)}{N}} e^{2j\pi\frac{(k_i-r_i)\cdot 0}{N}} Y^{(i)*}_{0-\sigma_i(k_i-r_i)[N]} \\ e^{+2j\pi\frac{r_i\left(1-\sigma_i(k_i-r_i)\right)}{N}} e^{2j\pi\frac{(k_i-r_i)\cdot 1}{N}} Y^{(i)*}_{1-\sigma_i(k_i-r_i)[N]} \\ \vdots \\ e^{+2j\pi\frac{r_i\left(N-1-\sigma_i(k_i-r_i)\right)}{N}} e^{2j\pi\frac{(k_i-r_i)\cdot(N-1)}{N}} Y^{(i)*}_{N-1-\sigma_i(k_i-r_i)[N]} \end{bmatrix}$$

Fourier transformation corresponds to an inverse Fourier transform and when the said conjugate chirp signal corresponds to the conjugation of the said received signal; where $S_k = (-1)^k e^{j\pi\sigma\frac{k^2}{N}}$ and where σ is a parameter belonging to {-1,1}.

8. Method according to either of claims 6 and 7,
   **characterised in that** the said step of estimating the said channel coefficients comprises the following sub-steps:

   - calculating parameters representative of the said channel coefficient $\hat{H}_0$ and another of the said channel coefficients;
   - obtaining parameters representative of the remaining channel coefficients from the said calculated parameters.

9. Method according to any one of claims 3 to 8,

   **characterised in that** the said non-zero index channel coefficient I is inversely proportional to $\text{sine} \frac{\pi l}{N}$.

10. Method according to any one of claims 6 to 9,
    **characterised in that** the said predetermined symbol is a symbol of a learning sequence or a received symbol whose rank $k$ has been decided during a previous execution of the said symbol estimate step.

11. Computer program product, comprising program code instructions for implementing a method according to any one of claims 1 to 10, when the said program is executed on a computer.

12. Demodulation device (300, 300') of a received signal, the said received signal resulting from the modulation of a basic chirp signal whose instantaneous frequency (102, 102', 102", 102"') varies linearly between a first instantaneous frequency f0 and a second instantaneous frequency f1 during a symbol time Ts, the said modulation corresponding, for a symbol of rank s of a constellation of N symbols, s being an integer from 0 to N-1, to a circular permutation of the variation pattern of the said instantaneous frequency on the said symbol temps symbol Ts, obtained by a time shift of s times an elementary time duration Tc, such that N*Tc=Ts, and of the transmission of the modulated chirp signal in a transmission channel,
    **characterised in that** it comprises a reprogrammable calculating machine (702, 712) or a dedicated calculating machine (702, 712), capable of and configured for carrying out, for N samples of the said received signal and for N samples of a reference chirp signal obtained by modulating the said basic chirp signal by a reference symbol corresponding to a symbol of rank r in the said constellation, taken at the same multiple instants of Tc:

    - conjugating the said N samples of the said reference chirp signal, respectively of the said N samples of the said received signal, so as to deliver N samples of a conjugate chirp signal;
    - multiplying term by term the said N samples of the said conjugate chirp signal by the said N samples of the said received signal, respectively of the said reference chirp signal, so as to deliver N samples of a multiplied signal;
    - performing a direct or inverse Fourier transformation of the said multiplied signal, so as to deliver N samples $Y_l$ of a transformed signal, where I is an integer ranging from 0 to N-1;
    - determining from N decision components, from the said N samples $Y_l$ of the transformed signal, a decision component of index I, denoted component $D_i$, being a function of a term whose phase depends quadratically on I, where I is an integer from 0 to N-1;
    - deciding on the rank $k$ of the symbol carried by said received signal, from the decision of index k, denoted component $D_k$, having an extreme value among the said N decision components,

    said component $D_k$ being furthermore a function of a term proportional to an amplitude of the sample of the said index k, $Y_k$, among the said N samples $Y_l$ of the said transformed signal, as well as the phase of the said sample $Y_k$.

**Figure 1**

**Figure 2**

**Figure 3a**

**Figure 3b**

**Figure 4**

**Figure 5**

**Figure 6**

**Figure 7a**

**Figure 7b**

**EP 3 469 719 B1**

## RÉFÉRENCES CITÉES DANS LA DESCRIPTION

**Documents brevets cités dans la description**

- EP 2449690 B1